# EUROPÄISCHE PATENTSCHRIFT

(11) **EP 3 915 662 B1**
(45) Veröffentlichungstag und Bekanntmachung des Hinweises auf die Patenterteilung: **01.10.2025**
(21) Anmeldenummer: 21171441.5
(22) Anmeldetag: 30.04.2021
(51) Int. Cl.: B01D 29/23, B01D 29/35, B01D 29/64, B01D 29/82, B01D 35/30

(54) **SYSTEM ZUM FILTERN EINER FLÜSSIGKEIT, WASSERFÜHRENDES HAUSHALTSGERÄT MIT DEM SYSTEM UND VERFAHREN ZUM FILTERN EINER FLÜSSIGKEIT**
SYSTEM FOR FILTERING A LIQUID, WATER-CONDUCTING DOMESTIC APPLIANCE WITH THE SYSTEM AND METHOD FOR FILTERING A LIQUID
SYSTÈME DE FILTRAGE D'UN LIQUIDE, APPAREIL ÉLECTROMÉNAGER À CIRCULATION D'EAU DOTÉ DU SYSTÈME ET PROCÉDÉ DE FILTRAGE D'UN LIQUIDE

(30) Priorität: 28.05.2020 DE 102020206657
(43) Veröffentlichungstag der Anmeldung: 01.12.2021
(73) Patentinhaber: BSH Hausgeräte GmbH, 81739 München (DE)
(72) Erfinder: Eglmeier, Hans, 10587 Berlin (DE); Bischof, Andreas, 10407 Berlin (DE)

(56) Entgegenhaltungen:
- EP-A1- 1 222 950
- WO-A1-2018/198146
- CN-B- 107 115 706
- DE-A1- 4 401 705
- GB-A- 2 576 859

## Beschreibung

Die vorliegende Erfindung betrifft ein System zum Filtern einer Flüssigkeit, ein wasserführendes Haushaltsgerät mit dem System und ein Verfahren zum Filtern einer Flüssigkeit.

In wasserführenden Haushaltsgeräten kommen häufig Filter zum Einsatz, mit denen bestimmte Partikel abhängig von deren Größe aus einem Flüssigkeitsstrom ausgefiltert werden. Diese Filter finden beispielsweise Anwendung, um Zulaufwasser oder Abwasser zu oder von einem wasserführenden Haushaltsgerät zu filtern. Ferner werden solche Filter verwendet, um eine in einem Kreislauf zirkulierende Flüssigkeit innerhalb des wasserführenden Haushaltsgeräts zu filtern. Dabei können beispielsweise Mikroplastikpartikel aus der Flüssigkeit ausgefiltert werden. Bei diesen Anwendungen wird die sogenannte deadend-Filtration angewendet, bei der die ausgefilterten Partikel auf einer Oberfläche des Filters verbleiben. Dabei besteht jedoch das Risiko, dass der Filter durch die ausgefilterten Partikel schnell und frühzeitig verstopft. Dadurch kann sich der hydraulische Widerstand des Filters erhöhen. Mit anderen Worten kann bei einem konstanten Druck der zu filternden Flüssigkeit, ein Volumenstrom durch den Filter schnell abnehmen.

KR 2011 0123359 A zeigt einen Trockner mit einem Lüfter. Der Lüfter weist eine runde Filterfläche auf, die durch ein Streifelement abgefahren werden kann. Dadurch können an der Filterfläche angesetzte Verunreinigungen abgestreift werden. Die abgelösten Verunreinigungen fallen dann nach unten und werden in einer Auffangschale aufgefangen. Jedoch wird diese Lösung nur im Zusammenhang mit Luft als zu filterndes Medium gezeigt.

DE 4401705 A1 zeigt eine Vorrichtung zum Teilentwässern von Rohschlämmen mit Zu- und Ableitungen mit Steuermitteln und zumindest zwei Filterkammern. Die Filterkammern sind jeweils in zwei Arbeitskammern unterteilt. In den Filterkammern ist ein doppelseitig wirkender Kolben angeordnet. Durch den unter Druck stehenden Rohschlamm wird der Kolben, von einer ersten Endstellung in eine zweite Endstellung bewegt. Die Mantelfläche der Filterkammer ist dabei jeweils als Filter ausgebildet. Die Steuermittel steuern, von welcher Seite der Rohschlamm auf den Kolben aufgebraucht wird.

GB 2576859 A zeigt einen Komprimierer zum Entfernen und Komprimieren von Mikroplastik aus Abwässern. Der Komprimierer umfasst eine Kammer und einen Einlass zum Zuleiten von Abwasser in die Kammer hinein. Zumindest eine Platte ist beweglich in der Kammer angeordnet. Ein Antrieb zum Antreiben der Platte ist vorgesehen. Ferner umfasst die Kammer ein durchlässiges Netz.

Daher ist es eine Aufgabe der vorliegenden Erfindung ein System zum Filtern einer Flüssigkeit, ein wasserführendes Haushaltsgerät und ein Verfahren zum Filtern einer Flüssigkeit bereitzustellen, die ein frühzeitiges Zusetzen des Filters verhindern und damit einen konstanten hydraulischen Widerstand des Filters gewährleisten können.

Diese Aufgabe wird mit einem System zum Filtern einer Flüssigkeit gemäß Anspruch 1, einem wasserführenden Haushaltsgerät gemäß Anspruch 8 und einem Verfahren zum Filtern einer Flüssigkeit gemäß Anspruch 9 gelöst. Vorteilhafte Weiterbildungen der Erfindung sind Gegenstand der abhängigen Ansprüche.

Erfindungsgemäß wird ein System zum Filtern einer Flüssigkeit, insbesondere für ein wasserführendes Haushaltsgerät, bereitgestellt umfassend: ein Gehäuse, das in seinem Inneren zumindest ein bewegliches Element aufweist, welches zusammen mit dem Gehäuse zumindest einen im Wesentlichen fluiddichten Raum definiert, eine Flüssigkeitszufuhr, die dazu ausgestaltet ist, dem zumindest einen Raum eine Flüssigkeit zuzuführen, wobei zumindest ein Teil des Gehäuses als ein Filterelement ausgestaltet ist, so dass die Flüssigkeit über eine Filterfläche des Filterelements aus dem zumindest einen Raum ausgetragen werden kann, wobei das Filterelement dazu ausgestaltet ist, Partikel aus der Flüssigkeit zu filtern, und wobei die Filterfläche des Filterelements durch das zumindest eine bewegliche Element variabel ist, so dass die der Flüssigkeit zur Verfügung stehende Filterfläche des Filterelements durch das zumindest eine bewegliche Element, insbesondere hinsichtlich ihrer Lage und/oder Größe, verändert werden kann, wobei das zumindest eine bewegliche Element durch einen Aktor oder Stellmotor angetrieben wird.

Unter Filtern kann insbesondere ein Abtrennen von zusammen mit der Flüssigkeit transportierten Feststoffen aus der Flüssigkeit verstanden werden. Das Filtern kann von einem Filterelement (d.h. einem Filter) durchgeführt werden. Die Flüssigkeit kann durch die Filterfläche des Filterelements hindurchtreten. Dabei können die Feststoffe in bzw. an dem Filterelement zurückgehalten werden, wohingegen die Flüssigkeit das Filterelement passieren kann. Die Flüssigkeit kann flüssige Bestandteile wie Wasser, Behandlungsmittel usw. sowie Feststoffe wie Verunreinigungen, Waschmittelrückstände, Fremdkörper usw. umfassen. Die gefilterte Flüssigkeit kann als Filtrat bezeichnet werden. Ein Filtervorgang (d.h. das Hindurchtreten der Flüssigkeit durch das Filterelement) kann durch eine Druckdifferenz der Flüssigkeit zwischen einem stromaufwärts liegenden Bereich des Filterelements und einem stromabwärts liegenden Bereich des Filterelements bewirkt werden (jeweils in Bezug auf die Strömungsrichtung der Flüssigkeit). Vorzugsweise wird das System bei einem zeitlich begrenzten Filtervorgang eingesetzt, wie beispielsweise einem Zulauf oder Ablauf einer begrenzten Menge Flüssigkeit. Insbesondere können Feststoffe an einer Oberfläche des Filterelements zurückgehalten werden. Feststoffe können Partikel sein, die die Flüssigkeit als Trägerflüssigkeit nutzen. Insbesondere können dies Schmutz, Textilfasern (Baumwolle, Polyester, Polyamid, usw.), Haare, Waschmittelreste, Münzen, Knöpfe, Essensreste usw. sein. Die Flüssigkeit kann Zulaufwasser, Frischwasser, Abwasser oder Schmutzwasser sein, das einem bestimmten Prozess erstmals oder erneut zuzuführen ist. Insbesondere kann die Flüssigkeit auch eine in einem Prozess zirkulierende Flüssigkeit wie beispielsweise Waschlauge sein. Bei dem wasserführenden Haushaltsgerät kann es sich beispielsweise um eine Waschmaschine, eine Spülmaschine, einen Kaffeevollautomat und/oder einen Waschtrockner handeln.

Das Gehäuse kann ein formstabiles Gehäuse sein. Insbesondere kann das Gehäuse eine zylindrische, rechteckige oder quadratische Form aufweisen. Vorzugsweise kann das Gehäuse das bewegliche Element umgeben. Das bewegliche Element kann relativ zu dem Gehäuse beweglich sein. Beweglich kann dabei bedeuten, dass das bewegliche Element seine Lage und/oder Orientierung relativ zu dem Gehäuse verändern kann. Vorzugsweise kann das bewegliche Element relativ zu dem Gehäuse verschiebbar und/oder drehbar sein, sodass das bewegliche Element in dem Gehäuse eine translatorische Bewegung und/oder eine Rotationsbewegung ausführt.

Vorzugsweise können das bewegliche Element und das Gehäuse so ausgebildet sein, dass eine äußere Form des beweglichen Elements zu einer inneren Form des Gehäuses passen, sodass das bewegliche Element in das Gehäuse, insbesondere bündig, eingeschoben werden kann. Mit anderen Worten kann ein Spalt zwischen bestimmten Stellen (z.B. Kontaktstellen) des beweglichen Elements und dem Gehäuse sehr klein sein, bevorzugt kleiner als 0,5 mm. Vorzugsweise kann in dem Spalt zwischen dem beweglichen Element und dem Gehäuse ein Element (z.B. Streifelement und/oder Dichtelement) angeordnet sein, das den Spalt zwischen dem Gehäuse und dem beweglichen Element reduziert oder schließt. Ferner kann das bewegliche Element in direktem oder/und indirektem Kontakt mit dem Gehäuse stehen. Das bewegliche Element kann zumindest ein weiteres bewegliches Element aufweisen, vorzugsweise zumindest eine Lamelle, die durch eine Vorspannung mit dem Gehäuse in Kontakt stehen kann.

Im Rahmen der vorliegenden Erfindung kann fluiddicht bedeuten, dass ein ungewollter Austritt von Flüssigkeit aus dem Raum weitgehend verhindert ist. Der Begriff im Wesentlichen kann dabei bedeuten, dass ein Austritt von Flüssigkeit durch einen Spalt aufgrund von Fertigungstoleranzen und/oder Verschleiß, insbesondere an Kontaktstellen zwischen dem beweglichen Element und dem Gehäuse, nicht berücksichtigt wird. Mit anderen Worten gilt erfindungsgemäß ein Raum auch dann noch als fluiddicht, wenn geringe Mengen von Flüssigkeit aus diesem austreten. Insbesondere kann ein Raum auch dann noch als erfindungsgemäß fluiddicht gelten, wenn bis zu 5 % der in den Raum hinein zugeführte Flüssigkeit ungewollt aus dem Raum austritt. Etwaige Öffnungen, Einlässe oder Auslässe zum Zuführen oder Abführen von Flüssigkeit in den Raum hinein oder aus dem Raum hinaus bleiben bei der Definition von fluiddicht außer Betracht, da diese eine gewollte Zu- und/oder Ableitung von Flüssigkeit bewirken. Mit anderen Worten kann der Raum fluiddicht sein, wenn Zuläufe und Abläufe geschlossen sind. Der Raum kann durch Abschnitte des Gehäuses und Abschnitte des beweglichen Elements gebildet und umschlossen sein.

Die erfindungsgemäße Flüssigkeitszufuhr kann einen Einlass für die zu filternde Flüssigkeit aufweisen. Dazu kann der Einlass so an dem Gehäuse und/oder dem beweglichen Element angeordnet sein, dass die zu filternde Flüssigkeit in den Raum hinein zugeführt werden kann. Ferner kann die Flüssigkeitszufuhr ein Verschlusselement aufweisen, das dazu ausgestaltet ist, eine Flüssigkeitszufuhr zu dem Raum zu steuern und/oder abzusperren. Das Verschlusselement kann als separates Bauteil oder als integrales Bauteil der Flüssigkeitszufuhr vorgesehen sein. Der Einlass kann jede geeignete Form aufweisen, um zu filternde Flüssigkeit (d. h. Flüssigkeit mit darin transportierten Feststoffen) dem Raum zuzuführen. Vorzugsweise kann der Einlass strömungsgünstig an dem Gehäuse angeschlossen sein, insbesondere kann der Einlass dabei tangential an dem Gehäuse angeschlossen sein. Ferner kann die Flüssigkeitszufuhr auch mehrere Einlässe aufweisen, die gleichzeitig oder intermittierend dem Raum eine zu filternde Flüssigkeit zuführen können.

Das Filterelement kann dazu ausgestaltet sein, den oben beschriebenen Filtervorgang durchzuführen. Dazu kann das Filterelement ein Filter sein, der eine Porengröße aufweisen kann, die aus der Flüssigkeit zu filternde Feststoffe (Partikel) zurückhält, aber die Flüssigkeit passieren lässt. Insbesondere kann der Filter eine Porenweite in einem Bereich von 5 µm bis 150 µm, bevorzugt 5 µm bis 100 µm, besonders bevorzugt 30 µm bis 50 µm aufweisen. Mit anderen Worten kann der Filtereffekt durch einen Siebeffekt erreicht werden, wonach die Poren des Filters kleiner sind als die Partikel, die zurückgehalten werden sollen. Das Filterelement kann so angeordnet sein, dass es in einer Aussparung des Gehäuses angeordnet ist und einen generellen Verlauf des Gehäuses fortsetzt. Insbesondere kann das Filterelement in der Mantelfläche des Gehäuses angeordnet sein. Zusätzlich oder alternativ kann das Filterelement in der Deckfläche (Grundfläche) des Gehäuses angeordnet sein. Das Filterelement kann dabei selbst ausreichend starr sein, um die Form des Gehäuses betriebssicher darzustellen (beispielsweise ein Sieb aus festem Material wie Metall oder Kunststoff) oder kann aus einem weicheren Filtermaterial bestehen (wie etwa Gazegewebe) und eine geeignete Stützstruktur aufweisen. Das Filterelement kann einen Rahmen aufweisen, der es trägt und für die nötige Stabilität sorgt. Das Filterelement kann eine Filterfläche aufweisen, an der sich Feststoffe ansammeln, die aus der Flüssigkeit ausgefiltert werden und das Filterelement nicht passieren können. Vorzugsweise erstreckt sich die Filterfläche über nahezu die gesamte Oberfläche des Filterelements. Vorzugsweise kann die Filterfläche dem Inneren des Raums zugewandt sein.

Ferner kann das Filterelement als ein Auslass fungieren, der dazu ausgestaltet ist, Flüssigkeit aus dem Raum auszutragen. Mit anderen Worten kann die Flüssigkeit über das Filterelement aus dem Raum austreten. Beim Austreten aus dem Raum kann die Flüssigkeit durch das Filterelement gefiltert werden. Ferner kann die Flüssigkeit dabei auch aus dem Gehäuse ausgetragen werden. Zurückgehaltene Partikel können auf der Filterfläche in dem Raum verbleiben, wohingegen das Filtrat aus dem Raum abgeführt werden kann. Das Filterelement kann ein Verschlusselement aufweisen, das den Austrag von Flüssigkeit aus dem Raum steuern und/oder unterbinden kann. Dabei kann das Verschlusselement als separates Bauteil stromabwärts (in Bezug auf die Strömungsrichtung der Flüssigkeit) des Filterelements angeordnet sein oder Teil des Filterelements sein.

Vorzugsweise kann die der Flüssigkeit zur Verfügung stehende Filterfläche aufgrund einer Bewegung des beweglichen Elements hinsichtlich ihrer Lage und/oder Größe verändert werden. Dabei kann die Filterfläche vergrößert und/oder verkleinert oder bei gleichbleibender Größe verschoben oder verlagert werden. Dabei wird nicht die Filterfläche an sich verschoben oder bewegt, sondern der Teil der Filterfläche, der dem Fluid zur Verfügung steht, um aus dem Raum auszutreten (d.h. der nutzbare Teil der Filterfläche). Die dem Fluid zur Verfügung stehende Filterfläche kann zwischen dem beweglichen Element und dem Gehäuse oder zwischen zwei beweglichen Elementen (beispielsweise zwischen zwei Kolben) gebildet sein. Mit anderen Worten kann die Fläche der Filterfläche, die der Flüssigkeit für einen Durchtritt zur Verfügung steht, variiert werden. Dabei kann sich die Filterfläche proportional zu einer Änderung des Volumens des Raums ändern. Mit anderen Worten kann die der Flüssigkeit zur Verfügung stehende Filterfläche abhängig von der Position des zumindest einen beweglichen Elements innerhalb des Gehäuses variabel sein. Beispielsweise kann, wenn der Raum in dem Gehäuse klein ist, auch die zur Verfügung stehende Filterfläche klein sein. Demgegenüber kann beispielsweise, wenn der Raum in dem Gehäuse groß ist, auch die zur Verfügung stehende Filterfläche groß sein. So kann der Abschnitt des Gehäuses, der zusammen mit dem beweglichen Element den Raum bildet, abhängig von der Position des beweglichen Elements variiert werden. Folglich kann die Größe der zur Verfügung stehenden Filterfläche durch das bewegliche Element reguliert und/oder gesteuert werden. Das System weist eine Steuereinheit auf, die das bewegliche Element steuert. Vorzugsweise kann das bewegliche Element basierend auf in Echtzeit erfasste Daten gesteuert werden. Das bewegliche Element wird auf Basis eines hydraulischen Widerstands des Systems gesteuert. Der hydraulische Widerstand wird auf Basis eines Drucks innerhalb des Raums und/oder in einer Zuflussleitung der Flüssigkeit zu dem Raum bestimmt. Das bewegliche Element kann auch direkt basierend auf einem gemessenen Druck in dem Raum und/oder in der Zuflussleitung gesteuert werden. Zusätzlich oder alternativ kann die Bewegung des beweglichen Elements auf Basis einer verstrichenen Zeit und/oder einer Menge an Filtrat, das durch das Filterelement hindurchgetreten ist, gesteuert werden. Die dazu benötigten Daten können durch Sensoren, die in dem System vorgesehen sein können, erfasst werden.

Ferner kann das zumindest eine bewegliche Element so in dem Gehäuse aufgenommen sein, dass bei der Variation der der Flüssigkeit zur Verfügung stehenden Filterfläche des Filterelements ein abwechselnder funktioneller Kontakt zwischen dem Raum und der Flüssigkeitszufuhr und zwischen dem Raum und dem Ablauf über das Filterelement hergestellt wird, sodass es bei einer Bewegung des beweglichen Elements zu einer periodischen Pumpbewegung kommen kann, die mit jedem Zyklus ein Maximum des eingeschlossenen Volumens (Flüssigkeit) pumpen kann. Mit anderen Worten kann bei einem Vergrößern des Raums Flüssigkeit durch die Flüssigkeitszufuhr in den Raum hinein eingesaugt werden. Dabei ist es vorteilhaft, dass stromabwärts (in Bezug auf die Strömungsrichtung der Flüssigkeit) von dem Filterelement ein Rückschlagventil vorgesehen ist, das verhindert, dass die Flüssigkeit durch das Filterelement zurück in den Raum gelangt. Bei einem Verkleinern des Raums kann Flüssigkeit aufgrund des erhöhten Drucks innerhalb des Raums durch das Filterelement gedrückt werden und dadurch aus dem Raum ausgetragen werden. Ferner ist es denkbar, dass stromaufwärts (in Bezug auf die Strömungsrichtung der Flüssigkeit) von der Flüssigkeitszufuhr ein Rückschlagventil vorgesehen ist, oder dass mit anderen Mitteln verhindert wird, dass Flüssigkeit durch die Flüssigkeitszufuhr aus dem Raum austritt. Beispielsweise ist es auch denkbar, dass ein Teil des beweglichen Elements, während einem Verkleinern des Raums, die Flüssigkeitszufuhr verschließt. Dadurch kann das System auch zum Pumpen der zu filternden Flüssigkeit verwendet werden. Dies ist besonders vorteilhaft bei geringen zu pumpenden Volumina. Ferner ist es denkbar, dass ein solches System in einem Bodenbereich eines wasserführenden Haushaltsgeräts angeordnet ist und verwendet wird, um Wasser aus einem Tiefpunkt eines wasserführenden Systems wie beispielsweise einem Pumpensumpf, abzupumpen. Konstruktionsbedingt verbleibt in einem solchen Tiefpunkt häufig Flüssigkeit, welche bei einem Öffnen einer Wartungsklappe aus dem Gerät auslaufen kann, was für ein Benutzer unangenehm ist. Mit dem erfindungsgemäßen System kann ein solcher Tiefpunkt, wie beispielsweise ein Pumpensumpf, leergepumpt werden.

Ferner kann ein Filtratsammler vorgesehen sein, der das Gehäuse des Systems zumindest teilweise umgibt. Das Filtrat kann großflächig aus der stromabwärtigen Seite des Filterelements austreten und kann in dem Filtratsammler gesammelt werden. Der Filtratsammler kann dazu ausgestaltet sein, das Filtrat definiert abzuleiten. Der Filtratsammler kann beispielsweise trichterförmig ausgebildet sein und/oder einen trichterförmigen Auslass aufweisen. Der Filtratsammler kann so ausgestaltet sein, dass das Filtrat entsprechenden Stellen in dem wasserführenden Haushaltsgerät wie beispielsweise einer Abwasserleitung oder einer Umpumpleitung zugeführt werden kann. Vorzugsweise kann das System in einem drucklos betreibbaren Filtratsammler, besonders bevorzugt in einer als Filtratsammler fungierenden Einspülschale oder einem Einspülgehäuse einer Waschmaschine, aufgenommen sein und dort einer Umpumpfiltration dienen. Ferner kann das Filtrat der Schwerkraft folgend von dem Filterelement nach unten in den Filtratsammler, der als ein Einspülgehäuse ausgestaltet ist, laufen, gesammelt werden und dem Gesamtsystem beispielsweise über einen Laugenbehälter zugeführt werden. Dadurch ist kein zusätzlicher Filtratsammler erforderlich d.h. das System wird mit nach außen offener Filterfläche vorgesehen. Ferner kann der Filtratsammler ein Teil des Gehäuses sein und insbesondere integral mit diesem ausgebildet sein. Dadurch kann das System besonders einfach ausgestaltet sein.

Das erfindungsgemäße System bietet gegenüber dem Stand der Technik unter anderem den Vorteil, dass durch Variieren der zur Verfügung stehenden Filterfläche ein konstanter hydraulischer Widerstand und damit ein konstanter Flüssigkeitsstrom (bei gleichbleibender Pumpleistung) durch das System gewährleistet werden kann. So kann beispielsweise zu Beginn eines Filtervorgangs das bewegliche Element so in dem Raum angeordnet sein (eine Neutralstellung), dass der Raum relativ klein ist. Nach einem Start des Filtervorgangs setzt sich die zur Verfügung stehende Filterfläche mit ausgefiltert Partikeln zu. Werden dabei keine Gegenmaßnahmen ergriffen, so verringert sich der Durchfluss durch das System schnell und signifikant. Bei dem erfindungsgemäßen System kann nun das bewegliche Element so bewegt werden, dass sich der Raum in dem Gehäuse vergrößert und damit auch die der Flüssigkeit zur Verfügung stehende Filterfläche. Dadurch kann der Flüssigkeit neue noch nicht zugesetzte Filterfläche zur Verfügung gestellt werden, sodass der Durchfluss durch das System konstant beibehalten werden kann. Diese Steuerung kann situationsangepasst auf Basis von in Echtzeit gemessenen Daten gesteuert werden (siehe oben). Ferner kann bei dem erfindungsgemäßen System die Lage (d.h. die Position der der Flüssigkeit zur Verfügung stehenden Filterfläche) verändert werden. Dabei kann die Fläche der der Flüssigkeit zur Verfügung stehenden Filterfläche konstant bleiben und nur die Lage des Raums (und damit der Filterfläche) in dem Gehäuse mit Hilfe des zumindest einen beweglichen Elements verändert werden, so dass der Flüssigkeit neue, unbelegte Filterfläche zur Verfügung gestellt wird. Durch das erfindungsgemäße System kann der hydraulische Widerstand des Systems während einem Filtervorgang konstant beibehalten werden. Dadurch kann beispielsweise eine Pumpe, die dazu verwendet wird, um die benötigte Druckdifferenz für einen Filtervorgang aufzubauen, vergleichsweise klein dimensioniert sein, was die Energieeffizienz des Systems verbessert. Ferner kann der Durchfluss aufgrund des konstanten hydraulischen Widerstands ebenfalls konstant gehalten werden (beispielsweise bei gravitationsbasierten Systemen). Ferner kann ein einzelner Filtervorgang länger andauern und/oder öfter wiederholt werden, ohne dass das Filterelement gereinigt werden muss.

Vorzugsweise kann Filterfläche die gesamte Oberfläche des Gehäuses einnehmen. Es ist auch denkbar, dass die Filterfläche einen Bereich von 30 % bis 90 % der Oberfläche des Gehäuses, bevorzugt einen Bereich von 50 % bis 80 % der Oberfläche des Gehäuses, einnimmt. Dabei kann die Oberfläche des Gehäuses aus der Mantelfläche und/oder den Deckflächen gebildet sein. Ferner kann die Filterfläche auch in getrennten Bereichen die Oberfläche des Gehäuses einnehmen. Insbesondere kann das Gehäuse aus einer rahmenartigen Struktur bestehen, die die Filterfläche zwischen der rahmenartigen Struktur aufweist.

Eine möglichst große Filterfläche bietet den Vorteil, dass durch Bewegung des zumindest einen beweglichen Elements die Filterfläche in einem großen Ausmaß variiert werden kann. Somit kann der Zeitraum, über den ein hydraulischer Widerstand des Systems konstant gehalten werden kann, vergrößert sein. Die Fläche des Gehäuses, die nicht als Filterfläche genutzt wird, kann beispielsweise für statische Zwecke oder als Depot für herausgefilterte Partikel genutzt werden. Der bevorzugte Bereich bietet ein optimales Verhältnis aus Filterfläche und anders nutzbarer Fläche.

Vorzugsweise ist das zumindest eine bewegliche Element dazu ausgestaltet, sich während seiner Bewegung entlang des Filterelements zu bewegen und dabei von dem Filterelement zurückgehaltene Partikel von der Filterfläche zu verschieben und/oder zu sammeln, vorzugsweise weist das bewegliche Element dazu einen rakelartigen Abschnitt auf.

Ein rakelartiger Abschnitt kann dabei ein Abstreifkörper, beispielsweise eine Rakel, mit einer definierten Kante, oder mit einem definierten Bereich sein, mit dem eine zu berakelnde Fläche (d.h. die Filterfläche) z.B. von Partikeln befreit werden kann, indem die Partikel verschoben werden. Die Kante oder der definierte Bereich kann dabei eine hartes Element (z.B. eine Kunststofflippe) oder ein weiches Element (z.B. Gummilippe) sein. Ferner kann die Kante oder der definierte Bereich aus mehreren Borsten bestehen (z.B. Bürste). Ferner kann der rakelartige Abschnitt ein Abzieher, bevorzugt z.B. mit Gummiabstreiflippe zum Ausgleich von Unebenheiten sein. Der rakelartige Abschnitt kann elastisch verformbar sein. Insbesondere kann der rakelartikelartige Abschnitt gerade oder gekippt an dem beweglichen Element vorgesehen sein. Bei der Bewegung des beweglichen Elements entlang des Filterelements kann das bewegliche Element mit dem Filterelement in Kontakt sein. Vorzugsweise kann das bewegliche Element so ausgestaltet sein, dass es und/oder ein weiteres in dem beweglichen Element vorgesehenes Element mit einer vorbestimmten Druckkraft gegen das Filterelement gedrückt wird. Das bewegliche Element kann weitere rakelartige Abschnitte (z.B. Streiflippen) aufweisen, die mit dem Filterelement zumindest während einer Bewegung des zumindest einen beweglichen Elements in Kontakt sind. Vorzugsweise kann das bewegliche Element während einem Filtervorgang entlang der Filterfläche bewegt werden. Zusätzlich oder alternativ kann das zumindest eine bewegliche Element entlang der Filterfläche bewegt werden, wenn kein Filtervorgang im Gange ist. Sammeln kann in diesem Zusammenhang bedeuten, dass von der Filterfläche verschobene Partikel von dem beweglichen Element aufgenommen und/oder vor dem zumindest einen beweglichen Element hergeschoben werden können und von dem beweglichen Element somit verlagert werden können. Sind zwei bewegliche Elemente vorgesehen, können die Partikel von jedem beweglichen Element gesammelt und/oder verschoben werden. Dies kann gleichzeitig oder intermittierend erfolgen. Der rakelartige Abschnitt des beweglichen Elements, der mit der Filterfläche in Kontakt ist, kann eine spezielle geometrische Ausgestaltung aufweisen, die zu der Form der Filterfläche passen kann. Der rakelartige Abschnitt kann beispielsweise eine gerade (d.h. kontinuierliche) Form aufweisen. Alternativ kann der rakelartige Abschnitt auch eine sinusartig geschwungene Form oder eine gezackte Form aufweisen. Es ist jede Form denkbar, die dazu geeignet ist, die Filterfläche von darauf zurückgehaltenen Partikeln zu befreien, indem diese verschoben werden. Die Partikel können insbesondere durch ein Abstreifen, Abrakeln, Abtragen oder durch eine Kombination davon von der Filterfläche entfernt werden, sodass die Durchlässigkeit des Filterelements für die Flüssigkeit wiederhergestellt ist. Für eine bessere Anpassung des rakelartigen Abschnitts des beweglichen Elements, der mit dem Filterelement in Kontakt ist, kann der rakelartige Abschnitt elastisch verformbar ausgebildet sein. Alternativ oder zusätzlich kann das Filterelement elastisch verformbar ausgebildet sein. Somit kann gewährleistet werden, dass das bewegliche Element stets in zuverlässigen Kontakt mit der Filterfläche steht und somit zum einen den Raum zuverlässig bilden kann und zum anderen von dem Filterelement zurückgehaltene Partikel zuverlässig verschieben und/oder sammeln kann. Ferner kann aufgrund der Elastizität sichergestellt sein, dass das bewegliche Element das Filterelement nicht beschädigt.

Vorzugsweise weist das Gehäuse eine weitere verschließbare Öffnung auf, aus der die ausgefilterten Partikel ausgetragen werden können, insbesondere die von dem beweglichen Element verschobenen und/oder gesammelten Partikel.

Die aus der Flüssigkeit ausgefilterten und von der Filterfläche entfernten Partikel können in einem Depot innerhalb des Raums gesammelt werden (d.h. dorthin verschoben werden). Das Depot kann ein Bereich des Raums sein. Der Raum kann zumindest während einem Betrieb des Systems mit einem höheren Druck als der Umgebungsdruck beaufschlagt und mit Wasser gefüllt sein, wodurch ein Leeren des Depots für einen Benutzer aufwendig bzw. unangenehm sein kann. Insbesondere muss der Benutzer das druckfeste und wasserdichte Gehäuse öffnen und dann die meist nassen Partikel entnehmen. Denkbar wäre hierbei ein Einwegsystem vorzusehen, bei dem das Depot zusammen mit weiteren Teilen des Systems entsorgt werden muss. Bei dieser Lösung steht die Masse an wegzuwerfenden Bauteilen jedoch in keinem vernünftigen Verhältnis zu der Masse der ausgefilterten Partikel. Um diese Entnahmeproblematik der ausgefilterten Partikel durch einen Schleusenmechanismus zu lösen, welcher die ausgefilterten Partikel über die Nass-Trocken-Grenze und Druckgrenze des Systems ausschleust, können die ausgefilterten Partikel automatisch über die zusätzliche Öffnung aus dem Raum ausgetragen werden.

Die zusätzliche Öffnung kann eine Ausstoßöffnung für die von dem zumindest einen beweglichen Element gesammelten Partikel sein. Die zusätzliche Öffnung kann zusätzlich zu der Flüssigkeitszufuhr vorgesehen sein. Insbesondere kann die zusätzliche Öffnung mit dem Raum kommunizieren. Vorzugsweise kommuniziert die Öffnung mit dem Depot innerhalb des Raums und/oder ist in unmittelbarer Nähe zu dem Depot angeordnet. Die Öffnung kann dabei einen Durchmesser aufweisen, der ausreichend groß ist, um eine Vielzahl von gesammelten Partikeln aus dem Raum auszutragen. Die Öffnung kann einen Verschluss aufweisen, der die Öffnung beispielsweise während einem Filtervorgang verschließt. Der Verschluss kann als ein passiver Verschluss ausgestaltet sein, der mit dem beweglichen Element zusammenwirkt, sodass er sich öffnet, wenn sich das bewegliche Element in einer bestimmten Stellung befindet. Alternativ kann die Öffnung durch ein Teil des beweglichen Elements verschlossen werden, so dass das bewegliche Element auch als Verschluss für die Ausstoßöffnung dienen kann. Ferner kann die Öffnung auch durch ein weiteres in dem Raum vorgesehenes bewegliches Element verschlossen und geöffnet werden.

Werden die Partikel durch das bewegliche Element von der Filterfläche verschoben und an einem bestimmten Bereich innerhalb des Raums (in unmittelbarer Nähe der weiteren Öffnung) z.B. in dem Depot gesammelt, kann die weitere Öffnung geöffnet werden und die Partikel aus dem Raum ausgetragen werden. Vorzugsweise ist außerhalb des Raums ein Sammelbehälter vorgesehen, der die ausgestoßenen Partikel aufnehmen kann. Vorzugsweise kann das bewegliche Element während einem Ausstoßen der Partikel so in dem Gehäuse positioniert sein, dass der Raum nur mit der Ausstoßöffnung kommuniziert. Mit anderen Worten kann die Flüssigkeitszufuhr und/oder das Filterelement während dem Ausstoßen durch das bewegliche Element oder ein Teil davon von dem Raum getrennt sein (d.h. nicht mit dem Raum kommunizieren).

Mit dieser bevorzugten Ausführungsform können Partikel die Nass-Trocken-Grenze sowie die Druckgrenze des Systems automatisch überwinden, sodass eine Wartung und Bedienbarkeit des erfindungsgemäßen Systems verbessert ist. Insbesondere muss ein Nutzer weder die Filterfläche selber Reinigen noch gegebenenfalls feuchte Rückstände durch eine schleusenartige Öffnung manuell entfernen. Ferner bietet sich die Möglichkeit die ausgestoßenen Partikel in dem Sammelbehälter aktiv oder passiv weiter zu trocknen, sodass diese besonders vorteilhaft entsorgt werden können.

Vorzugsweise umfasst das System ferner einen Ausstoßer, der dazu ausgestaltet ist, ausgefilterte Partikel durch die weitere verschließbare Öffnung aus dem Raum auszustoßen.

Der Ausstoßer kann ein schieberartiges Element sein, das dazu ausgestaltet ist, die Partikel aus dem Raum herauszuschieben. Alternativ kann der Ausstoßer eine Düse sein, die dazu ausgestaltet ist, ein Medium ausstoßen und somit die Partikel aus dem Raum austragen kann. Das Medium ist vorzugsweise Luft. Alternativ kann auch eine Flüssigkeit als das Medium genutzt werden. Der Druck des aus der Düse ausgestoßenen Mediums ist dabei so bemessen, dass sichergestellt ist, dass die Partikel aus dem Raum ausgetragen werden können, insbesondere von dem zumindest einen beweglichen Element und/oder dem Gehäuse abgelöst werden können. Der Ausstoßer kann dabei so ausgestaltet sein, dass er die gesammelten Partikel aus dem Raum austragen kann.

Vorzugsweise kann das bewegliche Element so angeordnet und/oder ausgestaltet sein, dass die von dem beweglichen Element verschobenen und/oder gesammelten Partikel durch eine Zusammenwirkung des beweglichen Elements mit dem Gehäuse und/oder mit einem weiteren beweglichen Element zusammengedrückt werden können, um Flüssigkeit aus den gesammelten Partikeln auszupressen.

Durch Bewegen des beweglichen Elements können die Partikel nicht nur von der Filterfläche des Filterelements verschoben und/oder gesammelt werden, sondern auch in Zusammenwirkung mit einem weiteren beweglichen Element und/oder dem Gehäuse komprimiert werden. Dabei können die gesammelten Partikel zwischen dem beweglichen Element und dem Gehäuse und/oder dem weiteren beweglichen Element zusammengedrückt (komprimiert) werden. Ferner kann bei diesem Komprimierungsvorgang verbleibende Flüssigkeit aus den Partikeln ausgepresst werden. Die aus den Partikeln ausgepresste Flüssigkeit kann über das Filterelement oder einen anderen geeigneten Austragsweg aus dem Raum ausgetragen werden. Insbesondere kann das Zusammendrücken durch Verkleinern des zumindest einen Raums realisiert werden. Sind mehrere bewegliche Elemente in dem System vorgesehen, kann die Verkleinerung des Raums und damit das Komprimieren der Partikel durch eine Relativbewegung der mehreren beweglichen Elemente zueinander, insbesondere durch eine asynchrone Bewegung, realisiert werden. Vorzugsweise kann bei einem Vorsehen mehrerer beweglicher Elemente nur dasjenige aktiv angetrieben sein, welches die Partikel von der Filterfläche sammelunt und/oder verschiebt, wohingegen das andere in dem Gehäuse vorgesehen sein kann und die weitere Öffnung (Ausstoßöffnung) verschließen kann. Das aktiv angetriebene bewegliche Element kann dazu ausgestaltet sein, die gesammelten Partikel gegen das nicht aktiv angetriebene bewegliche Element zu drücken, um diese zu komprimieren. Übersteigt der Druck eine vorbestimmte Grenze, kann sich auch das nicht angetriebene bewegliche Element verschieben (d.h. relativ zu dem Gehäuse bewegen) und kann somit die Ausstoßöffnung freigeben. Dabei kann das nicht angetriebene bewegliche Element beispielsweise durch eine Rückstellfeder oder dergleichen gelagert sein. Somit kann das nicht aktiv angetriebene bewegliche Element in seine Ausgangslage (beispielsweise in einer Lage, in der die Ausstoßöffnung verschlossen ist) gedrängt werden.

Durch das Zusammenpressen der Partikel können Partikelpellets gebildet werden, die insbesondere aufgrund eines reduzierten Porenraums weniger Platz einnehmen und leicht zu lagern bzw. zu entsorgen sind. Durch das Entwässern der gesammelten Partikel umfassen diese kaum noch Flüssigkeit, weswegen die Pellets kompakt sind und leichter gelagert werden können. Ferner ist ein Sammeln und Aufbewahren der Partikel hygienischer, da ein Großteil der Flüssigkeit entfernt ist. Zudem wird ein Benutzer eher motiviert, die Partikel in dem Restmüll statt im Abwasser zu entsorgen, was zu weniger Verstopfungen im Abwassersystem führt.

Vorzugsweise kann das zumindest eine bewegliche Element ein Kolben sein, der dazu ausgestaltet ist, sich in dem Gehäuse hin- und herzubewegen, insbesondere können zwei Kolben vorgesehen sein, die dazu ausgestaltet sind, sich relativ zueinander in dem Gehäuse hin- und herzubewegen.

Der Kolben als das bewegliche Element kann zusammen mit dem Gehäuse den fluiddichten Raum bilden, dessen Volumen sich durch die Bewegung des Kolbens ändern kann. Aufgrund der Hin- und Herbewegung des Kolbens kann dieser als Hubkolben bezeichnet werden. Der Kolben wird mithilfe eines Aktors oder Stellmotors angetrieben. Ferner sind auch Gleichstrommotoren, Wechselstrommotoren, Schritt- bzw. BLDC-Motoren für einen Antrieb des beweglichen Elements denkbar. Zudem können zwei gegeneinander bewegliche Kolben in dem Gehäuse vorgesehen sein. Mit anderen Worten können die Kolben relativ zu dem Gehäuse und relativ zueinander beweglich sein. Ferner kann der Antrieb des zumindest einen beweglichen Elements (Kolben) über ein Getriebe (beispielsweise Kurbelgetriebe, Kulissengetriebe, Kurvengetriebe) angebunden sein. Eine geeignete Bewegungsabfolge lässt sich beispielsweise mit einem Kurbelgehäuse mit zwei Kurbeln mit etwa 90° Phasenversatz zwischen einem ersten beweglichen Element (beispielsweise einem ersten Kolben) und einem zweiten beweglichen Element (beispielsweise einem zweiten Kolben) erreichen. Ferner kann das bewegliche Element auch mit einem passiven Mechanismus, der durch Wasserdruck angetrieben werden kann, betrieben werden. Dabei ist kein Aktor nötig, da das System mit allen Funktionen über den Wasserdruck betrieben werden kann. Durch eine geeignete Wahl eines Kolbendurchmessers lässt sich bei gegebenem Pumpdruck die Antriebskraft praktisch beliebig einstellen, da die hydraulische Antriebskraft proportional zu der Kolbenfläche, also quadratisch mit dem Durchmesser steigt, während die verlangte Antriebskraft in etwa proportional zu dem Umfang, also linear mit dem Durchmesser ansteigt.

Ferner kann das Gehäuse eine zylindrische Form aufweisen. In dem Gehäuse können ein paddelartiger Hauptkolben, der zu dem Gehäuse eine koaxiale Kreisbewegung ausführt, und ein zweiter paddelartiger Kolben, der zu dem Gehäuse ebenfalls eine koaxiale Kreisbewegung ausführt vorgesehen sein. Dabei kann sich der Hauptkolben langsam gegen den Uhrzeigersinn bewegen und links neben Flüssigkeitszufuhr stehen. Die Flüssigkeitszufuhr kann dadurch mit einer rechten Kammer verbunden sein, wobei dabei Flüssigkeit aus dem rechten Raum über das Filterelement herausgefiltert wird. Gleichzeitig kann der rechte Raum durch den sich gegen den Uhrzeigersinn bewegenden Hauptkolben nach links expandiert werden, um einer zunehmenden Verstopfung der Filterfläche mit Bereitstellung von frischer Filterfläche zu begegnen.

Vorzugsweise kann das bewegliche Element ein Drehkolben sein, der dazu ausgestaltet ist, sich in dem Gehäuse zu drehen, wobei der Drehkolben dazu ausgestaltet sein kann, mit dem Gehäuse in Kontakt zu sein, um, insbesondere mittels mehrerer rakelartiger Abschnitte, mehrere abgeschlossene Räume innerhalb des Gehäuses zu definieren.

Der Drehkolben kann dabei als ein Rotor ausgebildet sein. Ferner kann das Gehäuse als eine Statorkammer ausgebildet sein und das bewegliche Element als der darin laufende Rotor. Der Rotor kann dabei so in dem Gehäuse angeordnet sein, dass er eine eindimensionale Bewegung (z.B. Drehung) oder eine zweidimensionale Bewegung (z.B. Drehung und Verlagerung) ausführt. Dazu kann der Rotor exzentrisch in dem Gehäuse gelagert sein. Ferner können in dem Rotor radiale Nuten vorgesehen sein, in denen Lamellen geführt sind, die nach außen gegen die Innenwand des Stators gedrückt werden können. Somit können in dem Gehäuse mehrere voneinander abgegrenzte und abgeschlossene Räume gebildet sein. Durch die Anordnung des Rotors in dem Gehäuse können sich die Räume während einer Bewegung des Rotors ihr Volumen verändern. Vorzugsweise können fünf Räume definiert sein. Dabei kann neben der Mantelfläche des Gehäuses auch zumindest ein Teil der beiden Deckflächen als das Filterelement ausgestaltet sein. Ferner kann die Flüssigkeitszufuhr in diesem Fall vorzugsweise drei Einlässe für die zu filternde Flüssigkeit aufweisen, sodass die Einlässe mehrere Räume abdecken, d.h. mit zu filternder Flüssigkeit beschicken können, vorzugsweise decken die Einlässe in Summe ein etwa 270° großes Segment des im Querschnitt runden Gehäuses ab. In den übrigen 90° können die von dem Filterelement entfernten Partikel zusammengedrückt und ausgestoßen werden. Damit kann das Filterelement in dem 270° umfassenden Segment die Funktion des Filterns erfüllen, während es gleichzeitig gereinigt werden kann. In den übrigen 90° kann die in den Partikeln verbleibende Flüssigkeit ausgedrückt werden und die Partikel komprimiert und ausgestoßen werden. Alternativ kann der Einlass auch als ein bogenförmiger Einlass ausgebildet sein, der ein bestimmtes Segment, vorzugsweise 270°, abdeckt.

Die Lamellen können mithilfe von Federn vorgespannt sein, damit die Lamellen zuverlässig an die innere Wandoberfläche des Gehäuses und/oder gegen das Filterelement gedrückt werden, um die im Wesentlichen fluiddichten Räume zu bilden. Alternativ können die Lamellen über Zapfen in einer oder mehreren Steuernuten, die in einem oder beiden Gehäusedeckeln ausgebildet sind, zwangsgeführt werden. Ferner kann das bewegliche Element zumindest ein zusätzliches elastisches Element wie beispielsweise eine Feder oder eine elastische Dichtlippe aufweisen, um die Räume noch zuverlässiger zu definieren und einen zuverlässigen Kontakt mit der Filterfläche sicherzustellen. Vorzugsweise kann dieses elastische Element an einem Außenende der Lamellen vorgesehen sein und gegen das Gehäuse gedrückt werden. Der Rotor kann so ausgestaltet sein, dass er abhängig von der Baugröße des Gehäuses mit weniger als einer Umdrehung je 20 Liter gefilterter Flüssigkeit rotieren kann. Bei üblichen Arbeitsgeschwindigkeiten eines wasserführenden Haushaltsgeräts kann sich eine Drehzahl von etwa 1 pro Minute ergeben.

Vorzugsweise erfolgt der Antrieb des Rotors mit einem Getriebemotor wie beispielsweise einem Ein-Phasen-Synchronmotor. Nichtsdestotrotz sind auch weitere Arten von Motoren zum Antreiben des Rotors geeignet. Mit Vorteil kann die Rotorgeschwindigkeit mittels eines geschwindigkeitsregelbaren Motors auf den am Zulauf zu dem System auftretenden Druck angepasst werden, sodass bei einem hohen Druck am Zulauf eine höhere Geschwindigkeit des Rotors eingestellt werden kann. Dieses System kann sich dann automatisch auf einen optimalen Arbeitspunkt einstellen.

Vorzugsweise kann sich auch bei dem erfindungsgemäßen System das Prinzip einer Rotationskolbenmaschine, wie sie von Wankel angegeben wurde, eingesetzt werden. Bei dieser Ausführungsform führt der Kolben (d.h. der Rotor) die zweidimensionale Bewegung aus. Dabei kann der Kolben aufgrund seiner Lagerung in dem Gehäuse eine Rotation und eine Verlagerung erfahren. Das Gehäuse kann entsprechend ausgeformt sein, um mit dem Kolben zusammenzuwirken und die oben dargestellten Phasen, des Filterns, des Sammelns von Partikeln, des Auspressens der Partikel und des Auswerfens der Partikel zu erfüllen. Ein Großteil des Gehäuses kann auch hierbei als Filterelement ausgestaltet sein und die Kolbenbewegung kann für periodische Volumen- und funktionelle Positionsveränderungen der in dem Gehäuse gebildeten Räume sorgen.

In diesem Zusammenhang kann eine exzentrische Drehung des beweglichen Elements eine Drehung des beweglichen Elements in dem Gehäuse um einen Punkt, der nicht der Mittelpunkt des Gehäuses ist, sein. Vorzugsweise kann sich das bewegliche Element um einen sich verändernden Punkt, wie beispielsweise ein Punkt auf einer Kreisbahn oder einer unregelmäßigen Bahn, drehen. Die einzelnen voneinander abgeschlossenen oder abgetrennten Räume sind jeweils von Teilen des beweglichen Elements und dem Gehäuse umgeben.

Die Verwendung eines Drehkolbens bietet den Vorteil, dass eine kontinuierliche Benutzung des Systems ermöglicht wird. Ferner sind über die gesamte Benutzungszeit gleichmäßige Filtereigenschaften, insbesondere ein gleichmäßiger hydraulischer Widerstand, gegeben.

Gemäß einem weiteren Aspekt der vorliegenden Erfindung wird ein wasserführendes Haushaltsgerät mit einem der obigen Systeme bereitgestellt.

Es gelten dieselben oben genannten Vorteile auch in Verbindung mit dem wasserführenden Haushaltsgerät, insbesondere kann ein wasserführendes Haushaltsgerät bereitgestellt werden, das besonders zuverlässig und effizient arbeitet und gleichzeitig bedienerfreundlich ist.

Gemäß einem weiteren Aspekt der vorliegenden Erfindung wird ein Verfahren zum Filtern einer Flüssigkeit, insbesondere in einem wasserführenden Haushaltsgerät, wobei das Verfahren die folgenden Schritte aufweist: Bereitstellen eines der obigen Systeme, Ausfiltern von Partikel aus einer dem zumindest einen Raum zugeführten Flüssigkeit, indem die Flüssigkeit durch das Filterelement aus dem Raum ausgetragen wird, Bewegen des zumindest einen beweglichen Elements, so dass die Filterfläche des Filterelements variabel ist, so dass die der Flüssigkeit zur Verfügung stehende Filterfläche des Filterelements durch das zumindest eine bewegliche Element, insbesondere hinsichtlich ihrer Lage und/oder Größe, wird, vorzugsweise wird dabei eine Bewegungsgeschwindigkeit und/oder Bewegungsrichtung des beweglichen Elements basierend auf einem erfassten hydraulischen Widerstand des Systems gesteuert.

Vor dem Schritt des Ausfilterns von Partikeln kann die Flüssigkeitszufuhr geöffnet werden, so dass Flüssigkeit in den Raum eintritt. Abhängig von der Porengröße des Filterelements kann der Filtervorgang direkt beginnen, wobei eine Partikelfracht von dem Filterelement zurückgehalten wird. Die Partikel können sich auf der Filterfläche des Filterelements sammeln und dieses zunehmend verstopfen. Durch das Bewegen des beweglichen Elements kann die der Flüssigkeit zur Verfügung stehende Filterfläche variiert werden, wodurch der Flüssigkeit frische und unbelegte Filterfläche zur Verfügung gestellt werden kann. Insbesondere kann der Raum durch die Bewegung des beweglichen Elements vergrößert werden, wodurch sich die der Flüssigkeit zur Verfügung stehende Filterfläche ebenfalls vergrößert. Ferner kann der Raum durch die Bewegung des zumindest einen beweglichen Elements in dem Gehäuse verschoben oder verlagert werden, so dass die der Flüssigkeit zur Verfügung stehende Filterfläche die gleiche Größe beibehält, aber verlagert wird, so dass der Flüssigkeit neue und unbelegte Filterfläche zur Verfügung gestellt wird. Damit kann der zunehmenden Verstopfung des Filterelements begegnet werden. Somit kann der hydraulische Widerstand des Systems während dem Filtervorgang konstant gehalten werden. Der hydraulische Widerstand des Systems kann insbesondere auf Basis eines Drucks in dem Raum und/oder eines Durchflusses durch das System bestimmt werden.

Vorzugsweise kann das Verfahren ferner die folgenden Schritte aufweisen: Abrakeln des Filterelements durch das bewegliche Element, um aus der Flüssigkeit ausgefilterte Partikel zu verschieben und/oder zu sammeln, und Zusammenpressen der gesammelten Partikel, indem der zumindest eine Raum durch das zumindest eine bewegliche Element verkleinert wird.

Die Schritte des Abrakelns und des Zusammenpressens der Partikel können abhängig von dem eingesetzten System während dem Filtervorgang (d.h. parallel dazu) oder davor/danach durchgeführt werden. Vorzugsweise ist, während dem Schritt des Zusammenpressens der Partikel, die Flüssigkeitszufuhr zu dem Raum, in dem die Partikel zusammengepresst werden, unterbunden (beispielsweise durch ein Verschließen der Flüssigkeitszufuhr durch das bewegliche Element.

Während dem Schritt des Abrakelns kann das bewegliche Element entlang des Filterelements bewegt werden, wodurch das bewegliche Element die Partikel von dem Filterelement verschiebt und sammelt. Dabei kann der Raum verkleinert werden, wodurch ein Druck in dem Raum ansteigen kann, sodass die in dem Raum verbleibende Flüssigkeit selbst durch ein belegtes Filterelement ausgetragen werden kann. Ferner kann das bewegliche Element die abgerakelten Partikel vor sich her schieben, bis der Raum so klein geworden ist, dass die Partikel durch das bewegliche Element und das Gehäuse und/oder ein weiteres bewegliches Element zusammengepresst werden. Dabei kann Flüssigkeit aus den Partikeln ausgepresst werden und ein Partikelpellet gebildet werden. Anschließend kann das Partikelpellet aus dem Raum ausgestoßen werden. Anschließend kann der Prozess beginnend mit dem Ausfiltern erneut beginnen. Alternativ und vorzugsweise können die Verfahrensschritte unter Verwendung des oben beschriebenen Systems mit Drehkolben zyklisch ausgeführt werden. Ferner kann nach dem Schritt des Zusammenpressens ein Ausstoßschritt vorgesehen sein, bei dem ein Ausstoßer das Pellet durch eine Ausstoßöffnung aus dem Raum ausstößt und einem außerhalb des Raums befindlichen Sammelbehälter zuführt. Der Sammelbehälter kann belüftet sein, sodass das Pellet weiter ausgetrocknet werden kann. Ferner kann der Sammelbehälter für einen Benutzer leicht zugänglich sein. Aufgrund der Belüftung kann die in dem Pellet verbleibende Flüssigkeit beispielsweise mittels Konvektion und Verdunstung weiter abgeben werden, sodass ein Benutzer den Sammelbehälter leicht und ausreichend hygienisch in den Restmüll entleeren kann.

Somit kann ein System bereitgestellt werden, bei dem die obigen Phasen nacheinander oder gleichzeitig (parallel zueinander) ausgeführt werden. Unabhängig davon, ob die einzelnen Phasen gleichzeitig oder nacheinander ausgeführt werden, kann eine Reinigung der Filterfläche vereinfacht und automatisiert werden. Ferner kann so vor einem nächsten Filtervorgang freie Filterfläche hergestellt werden, um das System vorteilhaft mit geringem Druck betreiben zu können. Ferner kann durch die mechanische Reinigung des Filterelements auch hartnäckig festsitzende Partikel entfernt werden. Dadurch verlängert sich die Lebensdauer des Filterelements. Ferner kann dauerhaft ein geringer hydraulischer Widerstand des Systems sichergestellt werden. Dadurch kann die gesamte Energieeffizienz des Systems verbessert sein.

Alle für das System beschriebene Merkmale und Vorteile gelten in analoger Weise für das Verfahren und andersherum.

Weitere Vorteile und Merkmale ergeben sich aus der nachfolgenden Beschreibung bevorzugter Ausführungsformen des erfindungsgemäßen Gegenstands mit Bezug auf die beigefügten Figuren. Einzelne Merkmale der einzelnen Ausführungsform können dabei im Rahmen der Erfindung miteinander kombiniert werden.

Es zeigt:
**Fig. 1** schematische Darstellungen des Systems gemäß einer ersten Ausführungsform der vorliegenden Erfindung,
**Fig. 2** schematische Darstellungen des Systems gemäß einer zweiten Ausführungsform der vorliegenden Erfindung,
**Fig. 3** schematische Darstellungen, die ein Verfahren gemäß einer Ausführungsform der vorliegenden Erfindung unter Verwendung der zweiten Ausführungsform darstellen,
**Fig. 4** schematische Darstellungen eines Systems gemäß einer dritten Ausführungsform der vorliegenden Erfindung,
**Fig. 5** eine schematische Darstellung des in Fig. 4 dargestellten Systems in einer anderen Verfahrensstellung,
**Fig. 6** eine schematische Darstellung einer Anordnung einer Ausführungsform gemäß der vorliegenden Erfindung,
**Fig. 7** eine schematische Darstellung eines Systems gemäß einer vierten Ausführungsform der vorliegenden Erfindung, und
**Fig. 8** eine schematische Darstellung eines Systems gemäß einer fünften Ausführungsform der vorliegenden Erfindung.

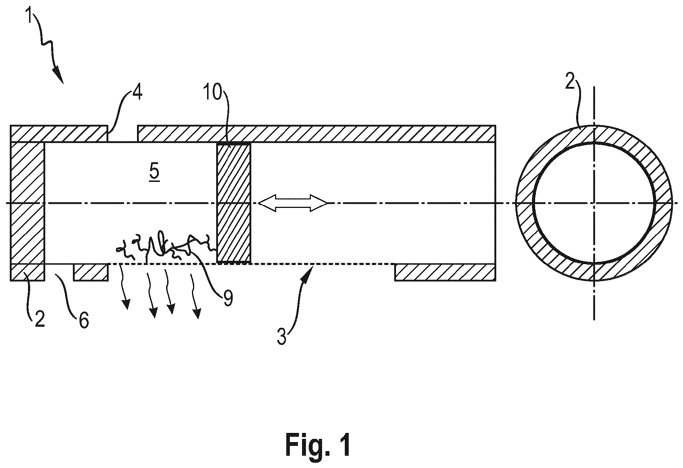

**Fig. 1** zeigt eine erste Ausführungsform des erfindungsgemäßen Systems 1 in einem schematischen Querschnitt. Auf der linken Seite von Fig. 1 ist das System 1 entlang einer Längsrichtung des Systems 1 geschnitten dargestellt. Auf der rechten Seite von Fig. 1 ist das System 1 orthogonal dazu geschnitten dargestellt. Das System 1 umfasst ein zylindrisches Gehäuse 2 mit einer Flüssigkeitszufuhr 4. Die Flüssigkeitszufuhr 4 kann eine Flüssigkeit, die Partikel 9 umfasst, dem Gehäuse 2 zuführen. Ein Teil des Gehäuses 2 ist als ein Filterelement 3 ausgebildet. Das Filterelement 3 ist dazu ausgestaltet, die Partikel 9 aus der Flüssigkeit herauszufiltern, wenn diese aus dem Gehäuse 2 über das Filterelement 3 austritt. In dem Gehäuse 2 ist ein Raum 5 ausgebildet, der durch das Gehäuse 2 und ein bewegliches Element 10 definiert ist. Das bewegliche Element 10 ist als ein Kolben ausgebildet und kann sich in der Längsrichtung des Systems 1 hin- und herbewegen (siehe Pfeil in Fig. 1). Ferner weist das System 1 eine weitere Öffnung 6 (Ausstoßöffnung) zum Ausstoßen von ausgefilterten Partikeln 9 auf. Die Ausstoßöffnung 6 ist dazu ausgestaltet, ausgefilterte Partikel 9 aus dem Raum 5 auszutragen. Ferner weist die Ausstoßöffnung 6 einen Verschluss (nicht dargestellt) auf, der die Ausstoßöffnung 6 verschließt, wenn diese nicht in Verwendung ist.

In Fig. 1 ist das System 1 in einer Neutralstellung dargestellt. In der Neutralstellung kommuniziert die Flüssigkeitszufuhr 4 mit dem Raum 5 und einem Teil des Filterelements 3 (d.h. nur mit einem Teil der Filterfläche des Filterelements 3). Der andere Teil des Filterelements 3 steht der Flüssigkeit in der Neutralstellung nicht zur Verfügung, da das bewegliche Element 10 so positioniert ist, dass sich der Raum 5 nur über einen Teil des Filterelements 3 erstreckt. Nun wird eine Flüssigkeit über die Flüssigkeitszufuhr 4 dem Raum 5 zugeführt. Bei der vorliegenden Ausführungsform wird die Flüssigkeit mithilfe einer Pumpe (nicht dargestellt) dem Raum 5 über die Flüssigkeitszufuhr 4 zugeführt. Ist die Flüssigkeit in dem Raum 5 und/oder übersteigt der Druck in dem Raum einen bestimmten Wert, beginnt Flüssigkeit durch das Filterelement 3 aus dem Raum 5 auszutreten. Die aus dem Raum 5 ausgetragene und durch das Filterelement 3 hindurchgetretene Flüssigkeit wird im Folgenden als Filtrat bezeichnet. Bei dem Hindurchtreten durch das Filterelement 3 werden die Partikel 9 an einer Oberfläche des Filterelements 3 (d.h. an der Filterfläche) zurückgehalten. Dadurch setzt sich das Filterelement 3 zu, sodass bei zunehmender Belegung des Filterelements 3 ein höherer Druck in dem Raum 5 notwendig ist, um die Flüssigkeit durch das Filterelement 3 hindurch zu drücken. Um dem entgegenzuwirken, kann das bewegliche Element 10 so bewegt werden, dass der Flüssigkeit eine größere Filterfläche des Filterelements 3 zur Verfügung gestellt wird. Bei der in Fig. 1 dargestellten Ausführungsform bewegt die das bewegliche Element 10 demnach nach rechts. Dadurch vergrößert sich auch das Volumen des Raums 5. Ferner wird der zu filternden Flüssigkeit frische, noch nicht zugesetzte Filterfläche zur Verfügung gestellt. Dadurch kann die Flüssigkeit das Filterelement 3 wieder mit geringerem Widerstand passieren. Die Bewegung des beweglichen Elements 10 wird bei der vorliegenden Ausführungsform so gesteuert, dass der Druck in dem Raum 5 im Wesentlichen konstant bleibt. Dazu ist bei der vorliegenden Ausführungsform ein Drucksensor (nicht dargestellt) in dem System 1 vorgesehen, der den Druck in dem Raum 5 in Echtzeit messen kann. Befindet sich das bewegliche Element 10 ganz am Ende des Filterelements 3, so steht keine weitere frische Filterfläche zur Verfügung, die das bewegliche Element 10 der Flüssigkeit in dem Raum 5 zur Verfügung stellen könnte. Bei der vorliegenden Ausführungsform ist die Größe des Systems 1 so bemessen, dass das Filterelement 3 und der Raum 5 für die zu erwartende zu filternde Flüssigkeit ausreichen. So wird das System 1 der vorliegenden Ausführungsform beispielsweise dazu verwendet, Waschlauge, die aus einem Laugenbehälter abgepumpt oder umgepumpt wird, zu filtern. Ist die Flüssigkeitszufuhr gestoppt, so bewegt sich das bewegliche Element 10 in die entgegengesetzte Richtung (in Fig. 1 in die linke Richtung). Dabei fährt das bewegliche Element 10 entlang des Filterelements 3 und sammelt dort befindliche Partikel 9 auf und schiebt diese vor sich her. Dies geschieht, indem das bewegliche Element 10 das Filterelement 3 mit einem an dem beweglichen Element 10 angeordneten rakelartigen Abschnitt abrakelt. Bei der vorliegenden Ausführungsform handelt es sich dabei um eine Rakel. Die Rakel ist ein Abstreifkörper mit einer definierten Kante, die mit dem Filterelement 3 in Kontakt ist. Die Kante weist dabei eine Gummilippe auf. Bei einer weiteren nicht dargestellten Ausführungsform weist die Kante mehrere Borsten auf. Das bewegliche Element 10 schiebt die ausgefilterten Partikel 9 vor sich her, bis das bewegliche Element 10 an einem Ende des Gehäuses 2 (in Fig. 1 ganz links) angekommen ist. Dort drückt das bewegliche Element 10 die Partikel 9 gegen die Gehäusewand 2. Dadurch werden die Partikel 9 zusammengepresst und komprimiert. Somit wird die in den Partikeln 9 verbliebene Flüssigkeit ausgepresst. Die Flüssigkeit läuft dabei durch eine Dränage (nicht dargestellt) zu dem Filterelement 3 und wird aus dem Raum 5 ausgetragen. Durch den Druck entsteht aus den Partikeln 9 ein Partikelpellet. Im Anschluss an das Auspressen öffnet sich die Ausstoßöffnung 6, sodass das Partikelpellet aus dem Gehäuse 2 ausgetragen werden kann. Für den Fall, dass das Partikelpellet nicht von selbst aus dem Gehäuse 2 hinausfällt, ist ein Ausstoßer 21 (in Fig. 1 nicht dargestellt) vorgesehen, der das Partikelpellet aus dem Gehäuse 2 hinausschieben kann. Anschließend kehrt das bewegliche Element 10 in die Neutralstellung zurück und ist für einen erneuten Filtervorgang bereit.

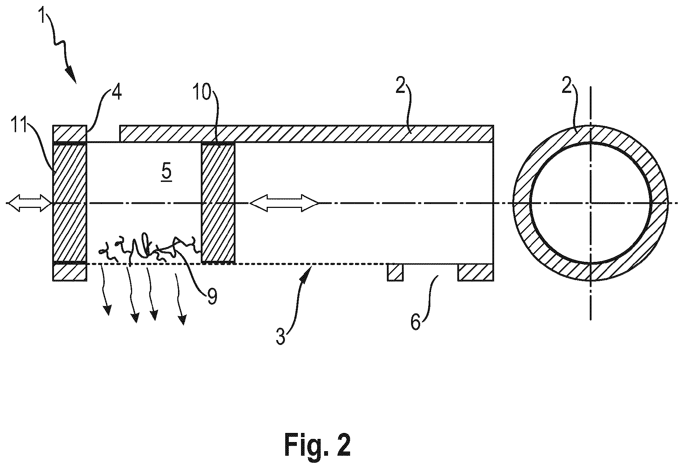

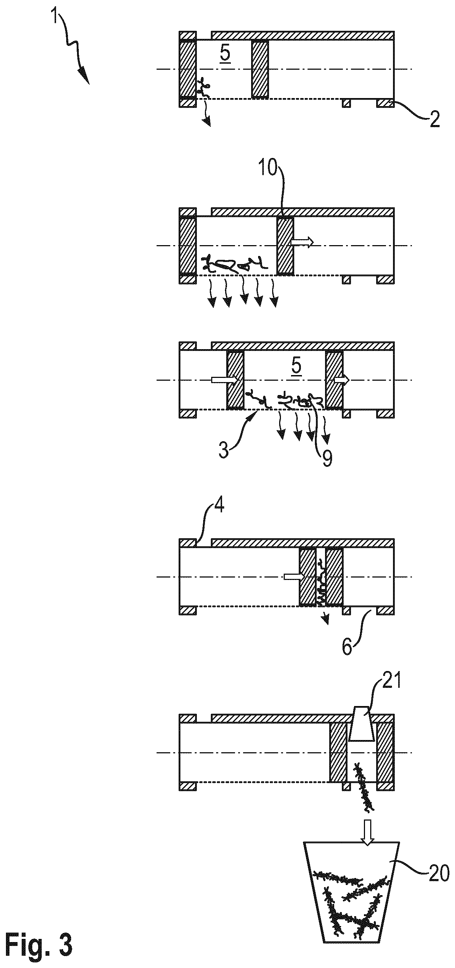

**Fig. 2** zeigt eine zweite Ausführungsform der vorliegenden Erfindung. Wie in Fig. 1 ist die zweite Ausführungsform in Fig. 2 auch mit zwei schematischen Schnitten dargestellt. Die zweite Ausführungsform entspricht im Wesentlichen der ersten Ausführungsform mit dem strukturellen Unterschieden, dass ein zweites bewegliches Element 11 in dem Gehäuse 2 vorgesehen ist, und dass sich die Ausstoßöffnung 6 an der anderen Seite des Filterelements 3 befindet. Das zweite bewegliche Element 11 ist genauso ausgestaltet, wie das erste bewegliche Element 10. Das erste bewegliche Element 10 und das zweite bewegliche Element 11 sind beweglich (siehe Pfeile in Fig. 2). Ferner unterscheidet sich die zweite Ausführungsform durch ihren Betrieb von der ersten. Der Betrieb der zweiten Ausführungsform wird mit Bezug auf Fig. 3 beschrieben.

**Fig. 3** zeigt einen schematischen Ablauf einer Verwendung des Systems 1 gemäß der zweiten Ausführungsform, die in Fig. 2 dargestellt ist. Bei der ersten in Fig. 3 dargestellten Abbildung kommuniziert der Raum 5 mit der Flüssigkeitszufuhr 4 und einem Teil des Filterelements 3. Flüssigkeit wird durch die Flüssigkeitszufuhr 4 in den Raum 5 hinein zugeführt und füllt diesen. Wie bei der ersten Ausführungsform wird die Flüssigkeit durch das Filterelement 3 gefiltert, wenn Flüssigkeit in den Raum 5 hinein zugeführt wird und/oder ein gewisser Druck in dem Raum 5 herrscht bzw. überschritten ist.

Bei der zweiten in Fig. 3 dargestellten Abbildung ist zu erkennen, dass aus der Flüssigkeit ausgefilterte Partikel 9 zunehmend die Filterfläche des Filterelements 3 zusetzen bzw. belegen. Mit zunehmender Belegung der Filterfläche des Filterelements 3 bewegt sich das erste bewegliche Element 10 (in Fig. 3 das rechte bewegliche Element) nach rechts. Dadurch wird frische, unbelegte Filterfläche des Filterelements 3 der Flüssigkeit zur Verfügung gestellt.

Bei der dritten in Fig. 3 dargestellten Abbildung ist die Filterfläche des Filterelements 3 weitgehend mit Partikel 9 belegt, sodass Flüssigkeit aus dem Raum 5 nur noch mit hohem Druck durch das Filterelement 3 hindurchtreten kann (d.h. hindurchgepresst werden kann). Daher bewegt sich das zweite bewegliche Element 11 (das linke bewegliche Element in Fig. 3) ebenfalls nach rechts. Dadurch wird die Flüssigkeitszufuhr 4 von dem Raum 5 abgetrennt, so dass der Raum 5 nur noch mit dem Filterelement 3 kommuniziert und dem Raum 5 keine zu filternde Flüssigkeit mehr zugeführt werden kann. Ferner rakelt das zweite bewegliche Element 11 das Filterelement 3 ab, sodass auf der Filterfläche des Filterelements 3 abgelagerte Partikel 9 von dem zweiten beweglichen Element 11 verschoben und gesammelt werden und zu einem Depot innerhalb des Raums 5 verschoben werden.

Bei der vierten in Fig. 3 dargestellten Abbildung erreicht das zweite bewegliche Element 11 zusammen mit den Partikeln 9, die es vor sich herschiebt, das erste bewegliche Element 10, sodass die Partikel 9 zwischen dem ersten beweglichen Element 10 und dem zweiten beweglichen Element 11 zusammengepresst werden. Dadurch werden die Partikel 9 komprimiert und Partikelpellets gebildet. Dabei kommuniziert der Raum 5 mit dem Filterelement 3, so dass aus den Partikeln 9 ausgepresste Flüssigkeit direkt über das Filterelement 3 aus dem Raum 5 ausgetragen werden kann.

Bei der fünften in Fig. 3 dargestellten Abbildung bewegen sich das erste bewegliche Element 10 und das zweite bewegliche Element 11 gleichzeitig zusammen mit dem gepressten Partikeln 9 (Partikelpellet) zu der Ausstoßöffnung 6. Bei dieser Bewegung bleibt der Raum 5 gleich groß. Dann wird die Ausstoßöffnung 6 geöffnet und das Partikelpellet mithilfe des Ausstoßers 21 in einen Auffangbehälter 20 aus dem Raum 5 ausgestoßen.

Bei der vorliegenden Ausführungsform ist der Sammelbehälter 20 für den Benutzer an einer leicht erreichbaren Stelle an oder in einem wasserführenden Haushaltsgerät angeordnet. Ferner weist der Sammelbehälter 20 eine Belüftung auf, sodass die darin befindlichen Partikelpellets weiter getrocknet werden können. In einer weiteren, nicht dargestellten Ausführungsform, weist der Partikelbehälter 20 eine Heizvorrichtung auf, die insbesondere mittels Abwärme, die bei Verwendung des wasserführenden Haushaltsgeräts entsteht, die Partikelpellets erwärmt, um ein Austrocknen der Partikelpellets weiter zu beschleunigen.

Zusammengefasst ist das System 1 der zweiten Ausführungsform wie das der ersten Ausführungsform dazu ausgestaltet, vier verschiedene Phasen abzuarbeiten. Bei der ersten Phase wird die Flüssigkeit durch das Filterelement 3 gefiltert. Bei der zweiten Phase wird das Filterelement 3 durch eines der beweglichen Elemente 11 abgerakelt. Bei der dritten Phase werden die abgerakelten Partikel 9 gepresst. Bei der vierten Phase werden die gepressten Partikel 9 aus dem Raum 5 ausgestoßen.

Bei einer weiteren nicht dargestellten Ausführungsform werden das erste bewegliche Element 10 und das zweite bewegliche Element 11 während der ersten Phase (Filtern der Flüssigkeit) so verschoben, dass der zwischen ihnen gebildete Raum 5 gleich groß bleibt. Damit wird der Flüssigkeit frische und unbelegte Filterfläche zur Verfügung gestellt und gleichzeitig das Filterelement 3 abgerakelt. Im Übrigen entspricht diese Ausführungsform der oben dargestellten zweiten Ausführungsform.

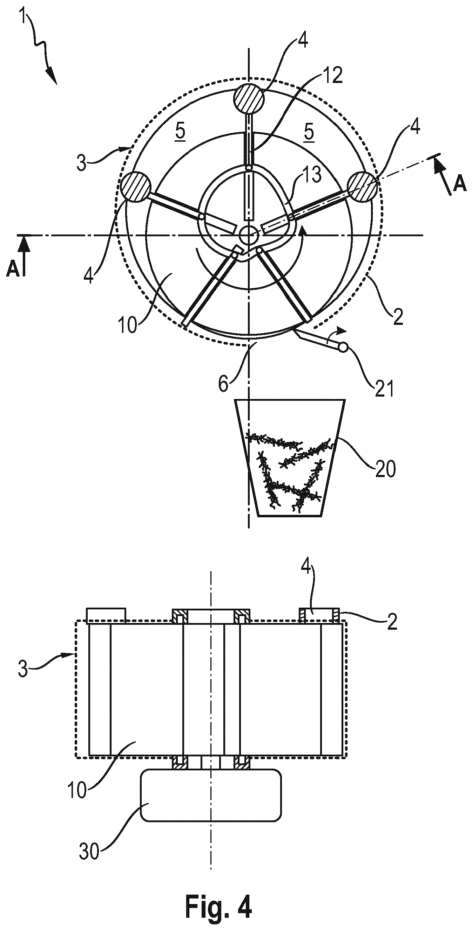

In **Fig. 4** ist eine dritte Ausführungsform der vorliegenden Erfindung dargestellt. Die obere in Fig. 4 dargestellte Darstellung zeigt einen Schnitt orthogonal zu einer Drehachse des beweglichen Elements 10 durch das System 10. Die untere in Fig. 4 dargestellte Darstellung zeigt einen Schnitt A-A. Bei der vorliegenden Ausführungsform können die oben beschriebene Phasen zyklisch und parallel zueinander (d.h. gleichzeitig) ausgeführt werden. Das System 1 der vorliegenden Ausführungsform basiert auf dem Prinzip einer Drehkolbenmaschine. Genauer gesagt ist das System 1 der vorliegenden Ausführungsform eine Flügelzellenkonstruktion.

Bei der vorliegenden Ausführungsform bildet das Gehäuse 2 eine Statorkammer mit einem darin laufenden Rotor (bewegliches Element 10). Die Drehachse des bewegliche Elements 10 ist außermittig (d.h. exzentrisch) in dem Gehäuse 2 angeordnet. In dem beweglichen Element 10 sind radiale Nuten ausgebildet, in denen Lamellen 12 laufen (hier fünf Nuten mit Lamellen 12). Die Lamellen 12 werden nach außen gegen die Innenwand des Gehäuses 2 gedrückt. Zum Andrücken der Lamellen 12 an das Gehäuse 2 werden bei der vorliegenden Ausführungsform die Lamellen 12 über Zapfen in einer in einem oder beiden Gehäusedeckeln befindlichen Steuernut 13 zwangsgeführt. Damit lassen sich relativ einfach auch weitere Verfahrensschritte einbauen, wie beispielsweise ein Zurückziehen der Lamellen 12 beim Überstreichen des Ausstoßers 21. Ferner weisen die Lamellen 12, insbesondere an deren Außenenden, ein elastisches Element auf (nicht dargestellt), um einen sicheren Kontakt mit dem Gehäuse 2 zu gewährleisten. Damit kann sichergestellt werden, dass die Räume 5 voneinander abgetrennt und im Wesentlichen fluiddicht sind. Bei einer Ausführungsform weist das elastische Element eine elastische Dichtlippe und/oder eine Feder auf. Bei einer weiteren nicht dargestellten Ausführungsform werden die Lamellen 12 mithilfe von Federn vorgespannt und damit gegen das Gehäuse 2 gedrückt.

Dadurch ergeben sich mehrere über den Umfang des beweglichen Elements 10 verteilte und voneinander abgegrenzte Räume 5, deren Position und Volumen durch Drehen des beweglichen Elements 10 (Rotor) für jeden Raum 5 einzeln der Reihe nach die in Zusammenhang mit der obigen Ausführungsform beschriebenen Phasen durchlaufen. Dabei werden für alle Räume 5 die Phasen parallel mit entsprechendem Phasenversatz (hier ein Phasenversatz von 72° wegen der fünf Räume 5) ausgeführt. Der Mantel des Gehäuses 2 ist nahezu vollständig als Filterelement 3 ausgebildet. Neben der Mantelfläche sind auch große Teile der beiden Deckflächen als Filterelement 3 ausgebildet. Dabei ist das Filterelement 3 selbst ausreichend steif, um die entsprechende Form des Gehäuses 2 betriebssicher darzustellen. Dazu weist das Filterelement 3 der vorliegenden Ausführungsform ein Sieb aus festem Material wie Metall oder Kunststoff auf. In einer weiteren nicht dargestellten Ausführungsform weist das Filterelement 3 ein weiches Filtermaterial wie beispielsweise Gazegewebe auf, weswegen das Filterelement 3 dieser Ausführungsform zusätzlich eine Stützstruktur aufweist, die das Filterelement stützt.

Ferner weist die Flüssigkeitszufuhr 4 drei Zulauföffnungen für die zu filternde Flüssigkeit auf. Die Zulauföffnungen decken in Summe ein etwa 270° großes Segment des kreisförmigen Gehäuses 2 ab, sodass das System 1 über diese 270° die Funktionen des Filterns und des Rakelns (Phasen eins und zwei) erfüllen kann. In den restlichen etwa 90° werden die Partikel 9 ausgepresst und das gebildete Partikelpellet ausgestoßen (Phasen drei und vier). Die Zulauföffnungen können auch zu einem einzigen bogenförmigen Zulauf vereinigt sein.

Das bewegliche Element 10 der vorliegenden Ausführungsform läuft vergleichsweise langsam und weist eine Drehzahl von etwa einer Umdrehung pro Minute auf. Der Antrieb des beweglichen Elements 10 erfolgt mit einem Einphasensynchronmotor 30. Bei einer weiteren Ausführungsform wird die Geschwindigkeit des beweglichen Elements 10 (d.h. die Rotationsgeschwindigkeit) basierend auf den im Zulauf (d.h. stromaufwärts der Flüssigkeitszufuhr 4) auftretenden Druck eingestellt und reguliert. So dreht sich das bewegliche Element 10 schnell, wenn der Druck in der Zulaufleitung zu dem Raum 5 hoch ist. Somit kann die Rotationsgeschwindigkeit des beweglichen Elements 10 so eingestellt werden, dass in der Zulaufleitung ein vorbestimmter Druck herrscht.

In Fig. 4 ist die Neutralstellung des Systems 1 dargestellt. Dabei kommuniziert die Flüssigkeitszufuhr 4 mit zwei der fünf Räumen 5. Die übrigen drei Räume 5 sind von der Flüssigkeitszufuhr abgeschnitten. In der unteren in Fig. 4 dargestellten Abbildung ist zu erkennen, dass auch die Deckflächen des Gehäuses 2 als Filterelement 4 ausgebildet sind. Ferner ist der Motor 30 dargestellt.

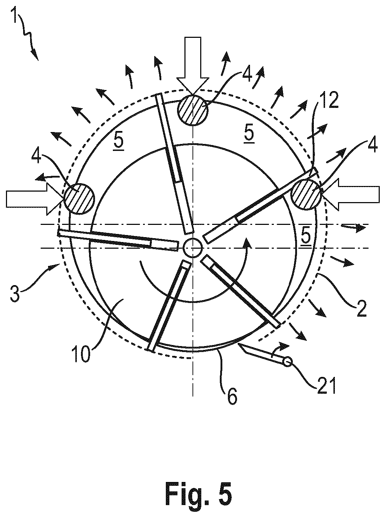

In **Fig. 5** **ist** das System 1 aus Fig. 4 in einer anderen Position dargestellt. Genauer gesagt hat sich in Fig. 5 das bewegliche Element 10 entgegen dem Uhrzeigersinn (siehe Pfeil in Fig. 5) gedreht. Nun kommuniziert die Flüssigkeitszufuhr 4 mit drei Räumen 5. Dadurch hat sich die Filterfläche des Filterelement 3, die der Flüssigkeit zur Verfügung stehen, variiert (d.h. die der Flüssigkeit zur Verfügung stehende Filterfläche hat sich erhöht und verlagert).

Bei einer weiteren nicht dargestellten Ausführungsform basiert das System auf dem Prinzip des Wankelmotors (Kreiskolben-Wankelmotor). Dabei ist ein Großteil des Gehäuses als ein Filterelement ausgestaltet. Ein sich in dem Gehäuse drehender Kolben dient dabei als das bewegliches Element 10. Das Gehäuse 2 ist dabei so ausgestaltet, dass es zusammen mit dem beweglichen Element 10 Räume 5 in dem Gehäuse 2 bildet, so dass das System 1 die obigen Phasen eins bis vier durchführen kann.

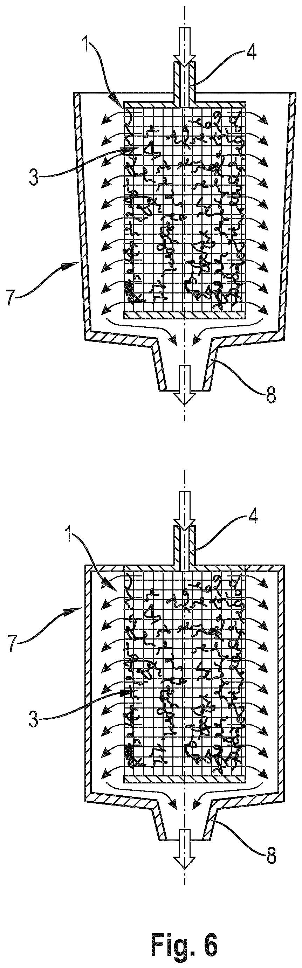

In **Fig. 6** sind zwei Querschnitte durch einen Filtratsammler 7 und das Systems 1 gemäß einer der obigen Ausführungsformen schematisch dargestellt. Der Filtratsammler 7 ist ein Gehäuse, das das System 1 zumindest teilweise umgibt. In einer nicht dargestellten Ausführungsform ist der Filtratsammler eine Einspülschale einer Waschmaschine. Das System 1 ist so in dem Filtratsammler 7 angeordnet, dass Filtrat, das aus dem Filterelement 3 austritt (siehe Pfeile in Fig. 6), von dem Filtratsammler 7 aufgefangen wird und definiert abgeleitet wird. Der Filtratsammler 7 kann das Filtrat beispielsweise einem weiteren Prozess in der Waschmaschine zuführen. In der oberen Darstellung der Fig. 6 ist der Filtratsammler 7 an seiner oberen Seite geöffnet, so dass bei dem Filtratsammler 7 ein Freispiegelabfluss erfolgt, d.h. in dem Filtratsammler 7 herrscht Umgebungsdruck.

Demgegenüber ist der untere in Fig. 6 dargestellte Filtratsammler 7 an seiner Oberseite geschlossen, sodass der Filtratsammler 7 das System 1 vollständig umgibt. Ferner herrscht in dem Filtratsammler 7 ein Überdruck relativ zu dem Umgebungsdruck, sodass das aus dem System 1 austretende Filtrat unter Druck abfließt (Druckabfluss). Der Filtratsammler ist darüber hinaus druckfest ausgebildet, sodass er einen Druck über dem Umgebungsdruck standhalten kann. Dazu ist der Filtratsammler aus einem entsprechenden Kunststoffmaterial ausgebildet. In einer weiteren Ausführungsform weist der Filtratsammler 7 Verstärkungselemente auf, sodass er noch standfester ist.

Ferner kann jeder der obigen Filtratsammler 7 einen trichterartigen Auslass 8 aufweisen, der dazu ausgebildet ist, dass Filtrat definiert abzuleiten. Dabei bedeutet definiert ableiten, dass der Filtratsammler das Filtrat in einer vorbestimmten Richtung ableitet. Der Auslass 8 kann integral mit dem Filtratsammler ausgebildet sein. Der Filtratsammler hat bei der vorliegenden Ausführungsform eine zylindrische Form, kann aber auch jede andere Form aufweisen. Vorzugsweise ist der Filtratsammler aus Kunststoff gebildet.

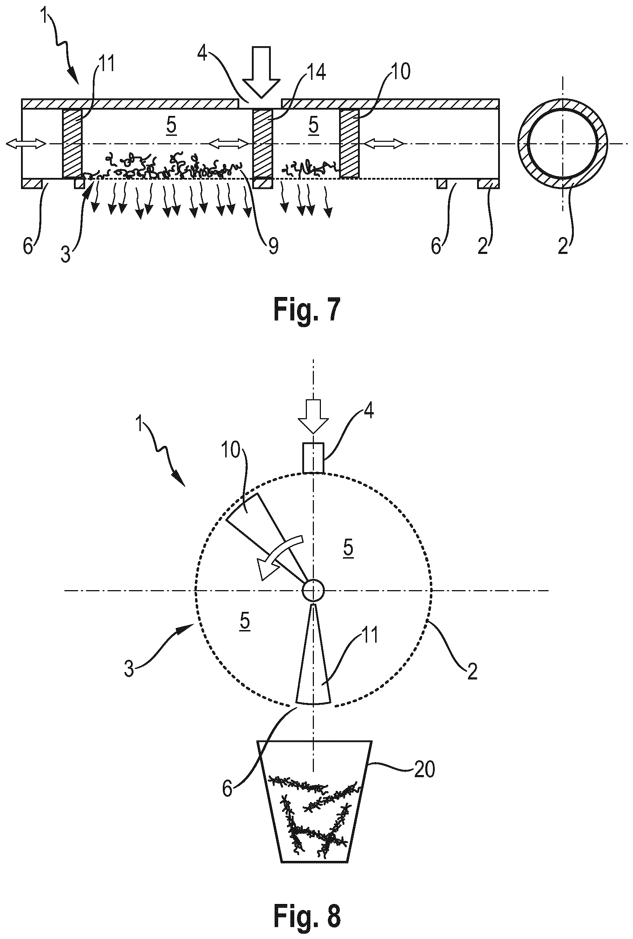

In **Fig. 7** ist eine vierte Ausführungsform der vorliegenden Erfindung im Schnitt schematisch dargestellt. Ein System 1 der vorliegenden Ausführungsform basiert auf dem Prinzip eines doppeltwirkenden Zylinders. Dabei ist das System 1 mit einer Flüssigkeitszufuhr 4 in der Mitte eines Gehäuses 2 versehen. Ein drittes bewegliches Element 14 als ein Hauptkolben unterteilt den Innenraum des Gehäuses 2 in zwei Räume 5 (links und rechts von dem beweglichen Element 14). Steht das bewegliche Element 14 rechts von der Flüssigkeitszufuhr 4, wird links davon gefiltert (Phase eins). Bewegt sich das bewegliche Element 14 weiter nach rechts, wird in dem Raum 5 rechts von dem beweglichen Element 14 gerakelt (Phase zwei) und links von dem beweglichen Element 14 entsteht frische und unbelegte Filterfläche des Filterelements 3. Am rechten Ende drückt das bewegliche Element 14 die Partikel 9 gegen ein erstes bewegliches Element 10. Dadurch werden die Partikel gepresst und zu einem Partikelpellet komprimiert (Phase drei). Ein Ausstoßer 21 wirft das Partikelpellet aus dem Raum 5 aus und führt es einem Auffangbehälter (in Fig. 7 nicht dargestellt) zu. Derselbe Prozess wird in dem Raum 5 links von dem beweglichen Element 14 durchlaufen. Dazu weist das System 1 der vorliegenden Ausführungsform ein zweites bewegliches Element 11 auf, das dem ersten beweglichen Element 10 entspricht.

In **Fig. 8** ist eine fünfte Ausführungsform der vorliegenden Erfindung dargestellt. Bei dieser Ausführungsform weist ein zylindrisches Gehäuse 4 einen paddelartigen Hauptkolben (erstes bewegliches Element) 10, der eine zum Gehäuse 4 koaxiale Kreisbewegung ausführt, und einen zweiten paddelartigen Kolben (zweites bewegliches Element) 11, der ebenfalls eine zum Gehäuse 2 koaxiale Kreisbewegung ausführt, auf. Das Gehäuse 2 ist nahezu vollständig als Filterelement 3 ausgebildet. In einem Neutralzustand ist eine Ausstoßöffnung 6 (unten in Fig. 8) durch das zweites bewegliche Element 11 verschlossen. Das erste bewegliche Element 10 bewegt sich langsam gegen den Uhrzeigersinn (siehe Pfeil in Fig. 8) und steht seitlich links neben einer Flüssigkeitszufuhr 4. Die Flüssigkeitszufuhr 4 ist dadurch mit einem Raum 5 rechts von dem ersten beweglichen Element 10 verbunden. In dem rechten Raum 5 wird dabei die dem Raum 5 zugeführte Flüssigkeit gefiltert (Phase eins), in dem Flüssigkeit über das Filterelement 3 aus dem System 1 austritt. Gleichzeitig wird der rechte Raum 5 durch das sich gegen den Uhrzeigersinn bewegende erste bewegliche Element 10 nach links expandiert, um der zunehmenden Belegung der Filterfläche des Filterelements 3 mit der Bereitstellung frischer Filterfläche des Filterelements 3 zu begegnen. In der sich dadurch gleichzeitig komprimierenden linken Kammer wird ggf. auf der Filterfläche des Filterelements 3 vorhandene Partikel 9 verschoben (gerakelt) (Phase zwei) und in Zusammenwirkung mit dem zweiten beweglichen Element 11 komprimiert (Phase drei), sodass Flüssigkeit aus den Partikeln 9 ausgepresst wird und die Partikel 9 verdichtet (komprimiert) werden. Bei größtmöglicher Kompression der Partikel 9 bewegt sich das zweite bewegliche Element 11 von der Auslassöffnung 6 weg und gibt diese zum Ausstoßen des Partikelpellets frei (Phase vier). Ein hier nicht näher dargestellter Ausstoßer 21 unterstützt diesen Vorgang.

Bevorzugt bewegt sich das zweite bewegliche Element 11 passiv, d.h. es wird durch den das erste bewegliche Element 10 über die ggf. zwischen beiden Elementflanken befindliche Partikel 9 angeschoben. Das zweite bewegliche Element 11 verfügt z.B. über eine symmetrisch arbeitende Rückstellfeder, die das zweite bewegliche Element 11 beim Zurückfahren des ersten beweglichen Elements 10 wieder in die Neutralstellung, d.h. mit verschlossener Ausstoßöffnung 6, bewegt.

Durch ständiges, turnusmäßiges oder nach Bedarf erfolgtes Antreiben des ersten beweglichen Elements 10 mit einer im Wesentlichen zwischen den beiden Endanschlägen oszillierenden Bewegung zusammen mit dem Verschieben des zweiten beweglichen Elements 11 und dem Aktivieren des Ausstoßers 21 ergibt sich praktisch ein kontinuierlicher Betrieb des Systems 1 ohne Pausen. Diese Ausführungsform ist mechanisch besonders einfach aufgebaut und verfügt über ein sehr gutes Filterfläche-zu-Bauvolumen-Verhältnis.

### Bezugszeichenliste

- 1: System
- 2: Gehäuse
- 3: Filterelement
- 4: Flüssigkeitszufuhr
- 5: Raum
- 6: Weitere Öffnung
- 7: Filtratsammler
- 8: Auslass
- 9: Partikel
- 10: erstes bewegliches Element
- 11: zweites bewegliches Element
- 12: Lamellen
- 13: Steuernut
- 14: drittes bewegliches Element
- 20: Auffangbehälter
- 21: Ausstoßer
- 30: Motor

## Patentansprüche

1. System (1) zum Filtern einer Flüssigkeit, insbesondere für ein wasserführendes Haushaltsgerät, umfassend:
ein Gehäuse (2), das in seinem Inneren zumindest ein bewegliches Element (10) aufweist, welches zusammen mit dem Gehäuse (2) zumindest einen im Wesentlichen fluiddichten Raum (5) definiert,
eine Flüssigkeitszufuhr (4), die dazu ausgestaltet ist, dem zumindest einen Raum (5) eine Flüssigkeit zuzuführen,
wobei zumindest ein Teil des Gehäuses (2) als ein Filterelement (3) ausgestaltet ist, so dass die Flüssigkeit über eine Filterfläche des Filterelements (3) aus dem zumindest einen Raum (5) ausgetragen werden kann,
wobei das Filterelement (3) dazu ausgestaltet ist, Partikel (9) aus der Flüssigkeit zu filtern,
wobei die Filterfläche des Filterelements (3) durch das zumindest eine bewegliche Element (10) variable ist, so dass die der Flüssigkeit zur Verfügung stehende Filterfläche des Filterelements (3) durch das zumindest eine bewegliche Element (10), insbesondere hinsichtlich ihrer Lage und/oder Größe, verändert werden kann, und
wobei das zumindest eine bewegliche Element (10) durch einen Aktor oder Stellmotor angetrieben wird,
**dadurch gekennzeichnet, dass** das System eine Steuereinheit umfasst, die dazu ausgestaltet ist, das bewegliche Element auf Basis eines hydraulisches Widerstands des Systems zu steuern, wobei der hydraulische Widerstand auf Basis eines Drucks innerhalb des Raums (5) und/oder in der Flüssigkeitszufuhr (4) der Flüssigkeit zu dem Raum bestimmt wird.

2. System (1) gemäß Anspruch 1, wobei das zumindest eine bewegliche Element (10) dazu ausgestaltet ist, sich während seiner Bewegung entlang des Filterelements (3) zu bewegen und dabei von dem Filterelement (3) zurückgehaltene Partikel (9) von der Filterfläche zu verschieben und/oder zu sammeln, vorzugsweise weist das bewegliche Element (10) dazu einen rakelartigen Abschnitt auf.

3. System (1) gemäß Anspruch 1 oder 2, wobei das Gehäuse (2) eine weitere verschließbare Öffnung (6) aufweist, aus der die ausgefilterten Partikel (9) ausgetragen werden können, insbesondere die von dem beweglichen Element (10) verschobenen und/oder gesammelten Partikel (9).

4. System (1) gemäß Anspruch 3, wobei das System (1) ferner einen Ausstoßer (21) umfasst, der dazu ausgestaltet ist, ausgefilterte Partikel (9) durch die weitere verschließbare Öffnung (6) aus dem Raum (5) auszustoßen.

5. System (1) gemäß einem der Ansprüche 2 bis 4, wobei das bewegliche Element (10) so angeordnet und/oder ausgestaltet ist, dass die von dem beweglichen Element (10) verschobenen und/oder gesammelten Partikel (9) durch eine Zusammenwirkung des beweglichen Elements (10) mit dem Gehäuse (2) und/oder mit einem weiteren beweglichen Element (11) zusammengedrückt werden können, um Flüssigkeit aus den gesammelten Partikeln (9) auszupressen.

6. System (1) gemäß einem der Ansprüche 1 bis 5, wobei das bewegliche Element (10) ein Kolben ist, der dazu ausgestaltet ist, sich in dem Gehäuse (2) hin- und herzubewegen.

7. System (1) gemäß einem der Ansprüche 1 bis 5,
wobei das bewegliche Element (10) ein Drehkolben ist, der dazu ausgestaltet ist, sich in dem Gehäuse (2) zu drehen,
wobei der Drehkolben dazu ausgestaltet ist, mit dem Gehäuse in Kontakt zu sein, um, insbesondere mittels mehrerer rakelartiger Abschnitte, mehrere abgeschlossene Räume (5) innerhalb des Gehäuses (2) zu definieren.

8. Wasserführendes Haushaltsgerät mit einem System (1) gemäß einem der Ansprüche 1 bis 7.

9. Verfahren zum Filtern einer Flüssigkeit, insbesondere in einem wasserführenden Haushaltsgerät, wobei das Verfahren die folgenden Schritte aufweist:
Bereitstellen eines Systems (1) gemäß einem der Ansprüche 1 bis 7,
Ausfiltern von Partikel (9) aus einer dem zumindest einen Raum (5) zugeführten Flüssigkeit, indem die Flüssigkeit durch das Filterelement (3) aus dem Raum (5) ausgetragen wird,
Bewegen des zumindest einen beweglichen Elements (10), so dass die Filterfläche des Filterelements (3) variabel ist, so dass die der Flüssigkeit zur Verfügung stehende Filterfläche des Filterelements (3) durch das zumindest eine bewegliche Element (10), insbesondere hinsichtlich ihrer Lage und/oder Größe, wird, vorzugsweise wird dabei eine Bewegungsgeschwindigkeit und/oder Bewegungsrichtung des beweglichen Elements (10) basierend auf einem erfassten hydraulischen Widerstand des Systems (1) gesteuert.

10. Verfahren gemäß Anspruch 9, wobei das Verfahren ferner die folgenden Schritte aufweist:
Abrakeln des Filterelements (3) durch das bewegliche Element (10), um aus der Flüssigkeit gefilterte Partikel (9) zu verschieben und/oder zu sammeln, und
Zusammenpressen der gesammelten Partikel (9), indem der zumindest eine Raum (5) durch das zumindest eine bewegliche Element (10) verkleinert wird.

## Claims

1. System (1) for filtering a liquid, in particular for a water-conducting household appliance, comprising:
a housing (2) which, in its interior, has at least one movable element (10) which, together with the housing (2), defines at least one substantially fluid-tight space (5),
a liquid supply (4), which is embodied to supply a liquid to the at least one space (5),
wherein at least one part of the housing (2) is embodied as a filter element (3), so that the liquid can be discharged from the at least one space (5) via a filter surface of the filter element (3),
wherein the filter element (3) is embodied to filter particles (9) out from the liquid,
wherein the filter surface of the filter element (3) is variable by way of the at least one movable element (10), so that the filter surface of the filter element (3) that is available for the liquid can be altered by way of the at least one movable element (10), in particular with regard to its position and/or size, and
wherein the at least one movable element (10) is driven by an actuator or servomotor,
**characterised in that** the system comprises a control unit, which is embodied to control the movable element on the basis of a hydraulic resistance of the system, wherein the hydraulic resistance is determined on the basis of a pressure within the space (5) and/or in the liquid supply (4) of the liquid to the space.

2. System (1) according to claim 1, wherein the at least one movable element (10) is embodied to move during its movement along the filter element (3) and, in this context, to displace particles (9) that have been held back by the filter element (3) from the filter surface and/or to collect them, preferably the movable element (10) has a squeegee-like section for this purpose.

3. System (1) according to claim 1 or 2, wherein the housing (2) has a further opening (6) which can be closed off, from which the filtered-out particles (9) can be discharged, in particular the particles (9) that have been displaced and/or collected by the movable element (10).

4. System (1) according to claim 3, wherein the system (1) further comprises an ejector (21), which is embodied to eject filtered-out particles (9) from the space (5) through the further opening (6) which can be closed off.

5. System (1) according to one of claims 2 to 4, wherein the movable element (10) is arranged and/or embodied such that the particles (9) that have been displaced and/or collected by the movable element (10) can be compressed through a combined effect of the movable element (10) with the housing (2) and/or with a further movable element (11), in order to squeeze liquid out from the collected particles (9).

6. System (1) according to one of claims 1 to 5, wherein the movable element (10) is a piston, which is embodied to move into and out from the housing (2).

7. System (1) according to one of claims 1 to 5,
wherein the movable element (10) is a rotary piston, which is embodied to rotate in the housing (2),
wherein the rotary piston is embodied to be in contact with the housing, in order to define multiple closed spaces (5) within the housing (2), in particular by means of multiple squeegee-like sections.

8. Water-conducting household appliance with a system (1) according to one of claims 1 to 7.

9. Method for filtering a liquid, in particular in a water-conducting household appliance, wherein the method has the following steps:
providing a system (1) according to one of claims 1 to 7,
filtering-out particles (9) from a liquid supplied to the at least one space (5), by discharging the liquid out of the space (5) through the filter element (3),
moving the at least one movable element (10), so that the filter surface of the filter element (3) is variable, so that the filter surface of the filter element (3) that is available for the liquid becomes by way of the at least one movable element (10), in particular with regard to its position and/or size, preferably in this context a movement speed and/or movement direction of the movable element (10) is controlled on the basis of a detected hydraulic resistance of the system (1).

10. Method according to claim 9, wherein the method further has the following steps:
squeegeeing the filter element (3) by way of the movable element (10), in order to displace and/or to collect particles (9) filtered out from the liquid, and
compressing the collected particles (9), by reducing the size of the at least one space (5) by way of the at least one movable element (10).

## Revendications

1. Système (1) pour filtrer un liquide, en particulier pour un appareil électroménager à circulation d'eau, comprenant :
un boîtier (2), qui comprend dans son intérieur au moins un élément mobile (10), qui définit, ensemble avec le boîtier (2), au moins une chambre essentiellement étanche aux fluides (5),
une amenée de liquide (4), qui est configurée pour alimenter un liquide jusqu'à l'au moins une chambre (5),
dans lequel au moins une partie du boîtier (2) est configurée sous forme d'un élément filtrant (3), de sorte que le liquide peut être extrait de l'au moins une chambre (5) via une surface filtrante de l'élément filtrant (3),
dans lequel l'élément filtrant (3) est configuré de manière à filtrer des particules (9) à partir du liquide,
dans lequel la surface filtrante de l'élément filtrant (3) est variable par l'au moins un élément mobile (10), de sorte que la surface filtrante de l'élément filtrant (3) disponible pour le liquide peut être modifiée par l'au moins un élément mobile (10), en particulier en ce qui concerne sa position et/ou sa grandeur, et
dans lequel l'au moins un élément mobile (10) est entraîné par un actionneur ou un servomoteur,
**caractérisé en ce que** le système comprend une unité de commande, qui est configurée pour commander l'élément mobile en fonction d'une résistance hydraulique du système, dans lequel la résistance hydraulique est déterminée sur la base d'une pression à l'intérieur de la chambre (5) et/ou dans l'alimentation de liquide (4) du liquide jusqu'à la chambre.

2. Système (1) selon la revendication 1, dans lequel l'au moins un élément mobile (10) est configuré pour se déplacer lors de son déplacement le long de l'élément filtrant (3), et ainsi transférer et/ou collecter des particules (9) retenues par l'élément filtrant (3), à partir de la surface filtrante, de préférence dans lequel l'élément mobile (10) comprend une section de type racleur à cette fin.

3. Système (1) selon la revendication 1 ou 2, dans lequel le boîtier (2) comprend une ouverture obturable supplémentaire (6), à partir de laquelle les particules filtrées (9) peuvent être extraites, en particulier les particules (9) transférées et/ou collectées par l'élément mobile (10).

4. Système (1) selon la revendication 3, dans lequel le système (1) comprend en outre un poussoir (21), qui est conçu pour pousser hors de la chambre (5) des particules filtrées (9) à travers l'ouverture obturable supplémentaire (6).

5. Système (1) selon l'une des revendications 2 à 4, dans lequel l'élément mobile (10) est disposé et/ou configuré de telle sorte que les particules (9) transférées et/ou collectées par l'élément mobile (10) peuvent être compressées par une interaction de l'élément mobile (10) avec le boîtier (2) et/ou avec un élément mobile supplémentaire (11), afin de presser le liquide hors des particules collectées (9).

6. Système (1) selon l'une des revendications 1 à 5, dans lequel l'élément mobile (10) est un piston, qui est configuré pour se déplacer dans un mouvement de va-et-vient dans le boîtier (2).

7. Système (1) selon l'une des revendications 1 à 5,
dans lequel l'élément mobile (10) est un piston rotatif à palettes, qui est conçu pour tourner dans le boîtier (2),
dans lequel le piston rotatif à palettes est configuré pour être en contact avec le boîtier, afin de définir plusieurs chambres fermées (5) à l'intérieur du boîtier (2), en particulier au moyen de plusieurs sections de type racleur.

8. Appareil électroménager à circulation d'eau comprenant un système (1) selon l'une des revendications 1 à 7.

9. Procédé pour filtrer un liquide, en particulier dans un appareil électroménager à circulation d'eau, dans lequel le procédé comprend les étapes suivantes :
fourniture d'un système (1) selon l'une des revendications 1 à 7,
filtration des particules (9) à partir d'un liquide alimenté dans au moins une chambre (5), en extrayant le liquide à travers l'élément filtrant (3) à partir de la chambre (5),
déplacement de l'au moins un élément mobile (10), de sorte que la surface filtrante de l'élément filtrant (3) est variable, de telle manière que la surface filtrante de l'élément filtrant (3) disponible est modifiée par l'au moins un élément mobile (10), en particulier en ce qui concerne sa position et/ou sa grandeur, et de préférence une vitesse de déplacement et/ou une direction de déplacement de l'élément mobile (10) est en outre commandée sur la base d'une résistance hydraulique détectée du système (1).

10. Procédé selon la revendication 9, dans lequel le procédé comprend en outre les étapes suivantes :
le raclage de l'élément filtrant (3) par l'élément mobile (10), pour transférer et/ou collecter des particules (9) filtrées à partir du liquide, et
le compactage des particules collectées (9), en compressant l'au moins une chambre (5) par l'au moins un élément mobile (10).
